(19) Europäisches Patentamt
European Patent Office
Office européen des brevets

(11) **EP 4 503 631 A1**

(12) **EUROPEAN PATENT APPLICATION**
published in accordance with Art. 153(4) EPC

(43) Date of publication:
**05.02.2025  Bulletin 2025/06**

(21) Application number: **23824087.3**

(22) Date of filing: **03.05.2023**

(51) International Patent Classification (IPC):
*H04N 23/55* (2023.01)    *H04N 23/54* (2023.01)
*G03B 17/12* (2021.01)    *G03B 17/17* (2021.01)
*G03B 3/00* (2021.01)    *G03B 13/32* (2021.01)
*G02B 15/14* (2006.01)    *G02B 7/10* (2021.01)
*G02B 7/182* (2021.01)    *G02B 13/00* (2006.01)

(52) Cooperative Patent Classification (CPC):
**G02B 7/10; G02B 7/182; G02B 13/00; G02B 15/14;
G03B 3/00; G03B 13/32; G03B 17/12; G03B 17/17;
H04N 23/54; H04N 23/55**

(86) International application number:
**PCT/KR2023/006065**

(87) International publication number:
**WO 2023/243861 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **13.06.2022  KR 20220071555
01.08.2022  KR 20220095515**

(71) Applicant: **Samsung Electronics Co., Ltd.
Suwon-si, Gyeonggi-do 16677 (KR)**

(72) Inventor: **SEO, Jungpa
Suwon-si Gyeonggi-do 16677 (KR)**

(74) Representative: **HGF
HGF Limited
1 City Walk
Leeds LS11 9DX (GB)**

(54) **LENS ASSEMBLY AND ELECTRONIC DEVICE COMPRISING SAME**

(57)    A lens assembly and/or an electronic device including same, according to an embodiment of the present disclosure, includes: a reflective optical member; an image sensor configured to receive or detect at least a portion of light incident from the reflective optical member, at least three sheets of lenses sequentially arranged along an optical axis direction between the reflective optical member and the image sensor; and a tunable lens disposed between the at least three sheets of lenses and the image sensor and configured to have a variable refractive power or curvature, wherein the reflective optical member may reflect, in the optical axis direction, light incident from a direction intersecting with the optical axis. Various other embodiments are possible.

FIG. 7

EP 4 503 631 A1

## Description

[Technical Field]

An embodiment of the disclosure relates to an electronic device, for example, a lens assembly and an electronic device including the same.

[Background Art]

Lens assemblies, for example, cameras capable of capturing images or videos have been widely used, and in recent years, digital cameras and video cameras with solid-state image sensors such as charge coupled devices (CCDs) or complementary metal-oxide semiconductors (CMOSs) have become commonplace. Lens assemblies with solid-state image sensors (CCDs or CMOSs) are replacing film-based lens assemblies due to the ease of storing, reproducing, and/or transferring images between electronic devices compared to the film-based lens assemblies.

Recently, a plurality of lens assemblies, for example, two or more selected from a close-up camera, a telephoto camera, and/or a wide-angle camera have been mounted on a single electronic device to improve the quality of a captured image, and also to provide various visual effects to the captured image. For example, images of an object may be obtained using a plurality of cameras with different optical characteristics and synthesized to obtain a high-quality captured image. Electronic devices such as mobile communication terminals and smartphones are gradually replacing electronic devices specialized for imaging functions, such as digital cameras, because they are equipped with a plurality of lens assemblies (e.g., cameras) to obtain high-quality images.

The above information is presented as background information only to assist with an understanding of the disclosure. No determination has been made, and no assertion is made, as to whether any of the above might be applicable as prior art with regard to the disclosure.

[Detailed Description of the Invention]

[Technical Problem]

In arranging a plurality of cameras in a single electronic device, it may be difficult to implement a close-up shooting function. For example, although close-up shooting may be performed using a standard camera or a wide-angle camera in a miniaturized electronic device, the quality of an object image may be degraded due to the shadow of a user or the electronic device when an object at a distance of about 5 to 10cm is captured. Use of a telephoto camera enables close-up shooting even at a distance of about 10cm or more, thereby suppressing the degradation of image quality caused by the shadow of the user. However, a high-magnification lens assembly (e.g., telephoto camera) may be difficult to mount in the miniaturized electronic device while securing a space or distance (e.g., a moving space or moving distance of the lens) for appropriate focus adjustment for close-up shooting.

An embodiment of the disclosure is to address at least the above-mentioned problems and/or disadvantages and to provide at least the advantages described below. Accordingly, an embodiment of the disclosure may provide a lens assembly which is capable of high-magnification/telephoto shooting and easy to miniaturize, and/or an electronic device including the same.

An embodiment of the disclosure may provide a lens assembly which implements telephoto and close-up shooting functions even when a space or distance for focus adjustment is small, and/or an electronic device including the same.

Additional aspects according to various embodiments will be presented in the following detailed description, and will be apparent in part from the description or understood through embodiments of a presented implementation.

[Technical Solution]

A lens assembly and/or an electronic device including the same according to an embodiment of the disclosure includes a reflective optical member, an image sensor configured to receive or detect at least a portion of light incident through the reflective optical member, at least three lenses arranged sequentially along a direction of an optical axis between the reflective optical member and the image sensor, and a tunable lens disposed between the at least three lenses and the image sensor and configured to have a variable refractive power or curvature. The reflective optical member reflects light incident in a direction intersecting the optical axis in the direction of the optical axis.

An electronic device according to an embodiment includes a housing, a display disposed on one surface of the housing, and a lens assembly configured to receive or detect at least a portion of light incident on one surface of the housing or the other surface facing in a direction opposite to the one surface. The lens assembly includes a reflective optical member, an image sensor configured to receive or detect at least a portion of light incident through the reflective optical member, at least three lenses arranged sequentially along a direction of an optical axis between the reflective optical member and the image sensor, and a tunable lens disposed between the at least three lenses and the image sensor and configured to have a variable refractive power or curvature. The reflective optical member reflects light incident in a direction intersecting the optical axis in the direction of the optical axis.

[Advantageous Effects]

According to embodiment(s) of the disclosure, a lens assembly may provide an environment suitable for telephoto shooting and close-up shooting in terms of focus adjustment by disposing a tunable lens between lens(es) and an image sensor. For example, the disclosed lens assembly may be easily mounted on a miniaturized electronic device by enabling focus adjustment suitable for telephoto shooting and close-up shooting without substantially requiring a lens moving space. In an embodiment, the high-magnification lens assembly may suppress the degradation of the quality of an obtained image caused by the shadow of a user or the shadow of an electronic device (e.g., an electronic device including the high-magnification lens assembly) by implementing a close-up shooting function while maintaining a sufficient distance from an object. Various other effects directly or indirectly understood through the specification may be provided.

[Brief Description of Drawings]

The above or other aspects, configurations, and/or advantages of an embodiment of the disclosure will be more apparent from the following description taken in conjunction with the accompanying drawings.

FIG. 1 is a block diagram illustrating an electronic device in a network environment according to an embodiment.
FIG. 2 is a front perspective view illustrating an electronic device according to an embodiment of the disclosure.
FIG. 3 is a rear perspective view illustrating the electronic device illustrated in FIG. 2.
FIG. 4 is an exploded perspective view illustrating the electronic device illustrated in FIG. 2.
FIG. 5 is a rear plan view illustrating an electronic device according to an embodiment of the disclosure.
FIG. 6 is a cross-sectional view illustrating a portion of the electronic device, taken along line A-A' of FIG. 5.
FIG. 7 is a diagram illustrating a lens assembly according to an embodiment of the disclosure.
FIG. 8 is a graph illustrating spherical aberration of the lens assembly illustrated in FIG. 7.
FIG. 9 is a graph illustrating astigmatism of the lens assembly illustrated in FIG. 7.
FIG. 10 is a graph illustrating distortion of the lens assembly illustrated in FIG. 7.
FIG. 11 is a diagram illustrating a close-up shooting mode of the lens assembly illustrated in FIG. 7.
FIG. 12 is a graph illustrating spherical aberration of the lens assembly illustrated in FIG. 11.
FIG. 13 is a graph illustrating astigmatism of the lens assembly illustrated in FIG. 11.
FIG. 14 is a graph illustrating distortion of the lens assembly illustrated in FIG. 11.
FIG. 15 is a diagram illustrating a lens assembly according to an embodiment of the disclosure.
FIG. 16 is a graph illustrating spherical aberration of the lens assembly illustrated in FIG. 15.
FIG. 17 is a graph illustrating astigmatism of the lens assembly illustrated in FIG. 15.
FIG. 18 is a graph illustrating distortion of the lens assembly illustrated in FIG. 15.
FIG. 19 is a diagram illustrating a close-up shooting mode of the lens assembly illustrated in FIG. 15.
FIG. 20 is a graph illustrating spherical aberration of the lens assembly illustrated in FIG. 19.
FIG. 21 is a graph illustrating astigmatism of the lens assembly illustrated in FIG. 19.
FIG. 22 is a graph illustrating distortion of the lens assembly illustrated in FIG. 19.
FIG. 23 is a diagram illustrating a lens assembly according to an embodiment of the disclosure.
FIG. 24 is a graph illustrating spherical aberration of the lens assembly illustrated in FIG. 23.
FIG. 25 is a graph illustrating astigmatism of the lens assembly illustrated in FIG. 23.
FIG. 26 is a graph illustrating distortion of the lens assembly illustrated in FIG. 23.
FIG. 27 is a diagram illustrating a close-up shooting mode of the lens assembly illustrated in FIG. 23.
FIG. 28 is a graph illustrating spherical aberration of the lens assembly illustrated in FIG. 27.
FIG. 29 is a graph illustrating astigmatism of the lens assembly illustrated in FIG. 27.
FIG. 30 is a graph illustrating distortion of the lens assembly illustrated in FIG. 27.
FIG. 31 is a diagram illustrating a lens assembly according to an embodiment of the disclosure.
FIG. 32 is a graph illustrating spherical aberration of the lens assembly illustrated in FIG. 31.
FIG. 33 is a graph illustrating astigmatism of the lens assembly illustrated in FIG. 31.
FIG. 34 is a graph illustrating distortion of the lens assembly illustrated in FIG. 31.
FIG. 35 is a diagram illustrating a close-up shooting mode of the lens assembly illustrated in FIG. 31.

FIG. 36 is a graph illustrating spherical aberration of the lens assembly illustrated in FIG. 35.
FIG. 37 is a graph illustrating astigmatism of the lens assembly illustrated in FIG. 35.
FIG. 38 is a graph illustrating distortion of the lens assembly illustrated in FIG. 35.
FIG. 39 is a diagram illustrating a lens assembly according to an embodiment of the disclosure.
FIG. 40 is a graph illustrating spherical aberration of the lens assembly illustrated in FIG. 39.
FIG. 41 is a graph illustrating astigmatism of the lens assembly illustrated in FIG. 39.
FIG. 42 is a graph illustrating distortion of the lens assembly illustrated in FIG. 39.
FIG. 43 is a diagram illustrating a close-up shooting mode of the lens assembly illustrated in FIG. 39.
FIG. 44 is a graph illustrating spherical aberration of the lens assembly illustrated in FIG. 43.
FIG. 45 is a graph illustrating astigmatism of the lens assembly illustrated in FIG. 43.
FIG. 46 is a graph illustrating distortion of the lens assembly illustrated in FIG. 43.
FIG. 47 is a diagram illustrating a lens assembly according to an embodiment of the disclosure.
FIG. 48 is a graph illustrating spherical aberration of the lens assembly illustrated in FIG. 47.
FIG. 49 is a graph illustrating astigmatism of the lens assembly illustrated in FIG. 47.
FIG. 50 is a graph illustrating distortion of the lens assembly illustrated in FIG. 47.
FIG. 51 is a diagram illustrating a close-up shooting mode of the lens assembly illustrated in FIG. 47.
FIG. 52 is a graph illustrating spherical aberration of the lens assembly illustrated in FIG. 51.
FIG. 53 is a graph illustrating astigmatism of the lens assembly illustrated in FIG. 51.
FIG. 54 is a graph illustrating distortion of the lens assembly illustrated in FIG. 51.
FIG. 55 is a diagram illustrating a lens assembly according to an embodiment of the disclosure.
FIG. 56 is a graph illustrating spherical aberration of the lens assembly illustrated in FIG. 55.
FIG. 57 is a graph illustrating astigmatism of the lens assembly illustrated in FIG. 55.
FIG. 58 is a graph illustrating distortion of the lens assembly illustrated in FIG. 55.
FIG. 59 is a diagram illustrating a close-up shooting mode of the lens assembly illustrated in FIG. 55.
FIG. 60 is a graph illustrating spherical aberration of the lens assembly illustrated in FIG. 59.
FIG. 61 is a graph illustrating astigmatism of the lens assembly illustrated in FIG. 59.
FIG. 62 is a graph illustrating distortion of the lens assembly illustrated in FIG. 59.

Like reference numerals may denote like parts, components, and/or structures through the accompanying drawings.

[Mode for Carrying out the Invention]

The following description taken in conjunction with the accompanying drawings may be provided to assist in a comprehensive understanding of various implementations of the disclosure defined by the claims and their equivalents. Although a specific embodiment disclosed in the following description includes various specific details to aid understanding, this is considered to be one of various embodiments. Therefore, it is obvious to those skilled in the art that various changes and modifications may be made to various implementations of the disclosure without departing from the scope and spirit of the disclosure. Additionally, for clarity and conciseness, a description of well-known functions and configurations may be avoided.

The terms and words used in the following description and claims may be used to clearly and consistently describe various embodiments of the disclosure, not limited to referential meanings. Accordingly, it will be obvious to those skilled in the art that the following description of various implementations of the disclosure is provided only for illustrative purposes, not for the purpose of limiting the disclosure defined by the claims and their equivalents.

Unless the context clearly dictates otherwise, the singular forms "a", "an", and "the" should be understood to include plural meanings. Therefore, for example, a "surface of a component" may mean one or more of the surfaces of the component.

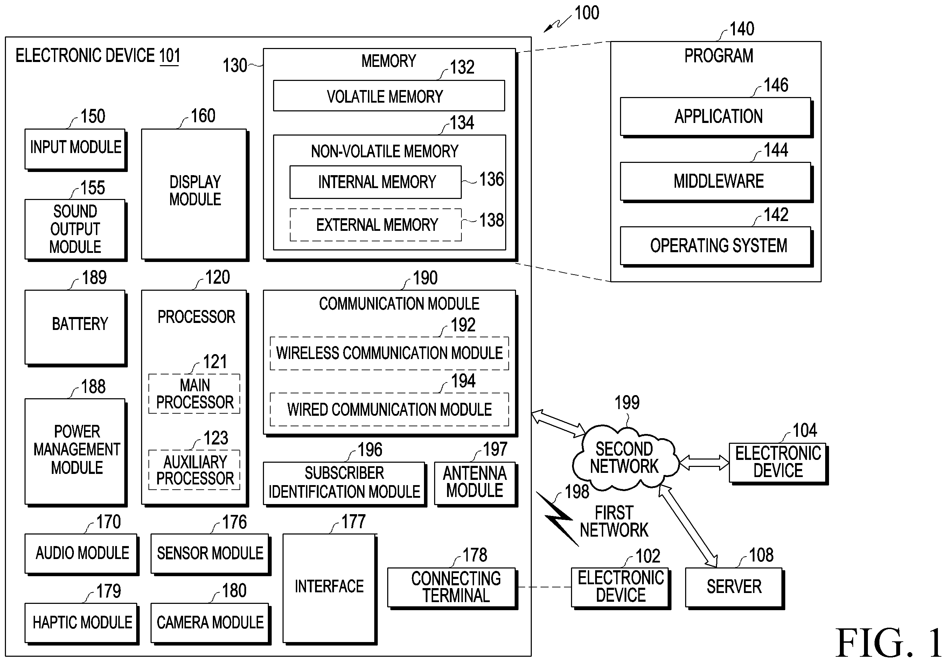

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas.

The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the following detailed description, a length direction, a width direction, and/or a thickness direction of an electronic device may be referred to. The length direction may be defined as a 'Y-axis direction', the width direction may be defined as an 'X-axis direction', and/or the thickness direction may be defined as a 'Z-axis direction'. In an embodiment, regarding a direction that a component faces, a 'negative sign/positive sign (-/+)' may be referred to together with the Cartesian coordinate system illustrated in the drawings. For example, a front surface of an electronic device or a housing may be defined as a 'surface facing a +Z direction', and a rear surface thereof may be defined as a 'surface facing a -Z direction'. In an embodiment, a side surface of the electronic device or the housing may include an area facing a +X direction, an area facing a +Y direction, an area facing a -X direction, and/or an area facing a -Y direction. In an embodiment, the 'X-axis direction' may mean both the '-X direction' and the '+X direction'. This is based on the Cartesian coordinate system depicted in the drawings, for simplicity of description, and it is to be noted that the description of these directions or components does not limit the embodiment(s) of the disclosure.

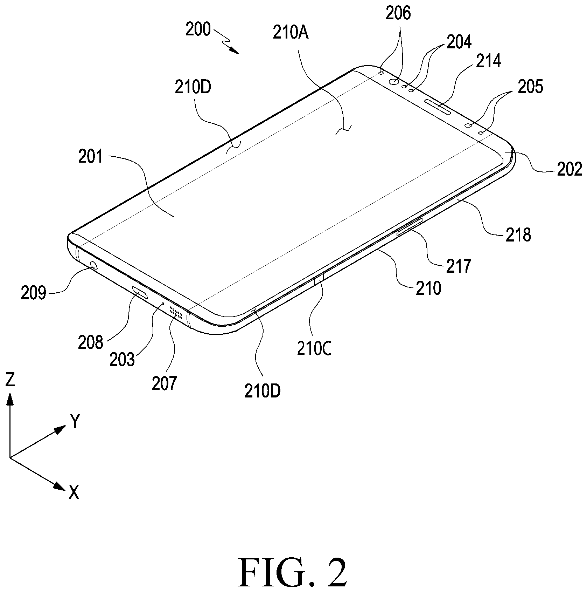

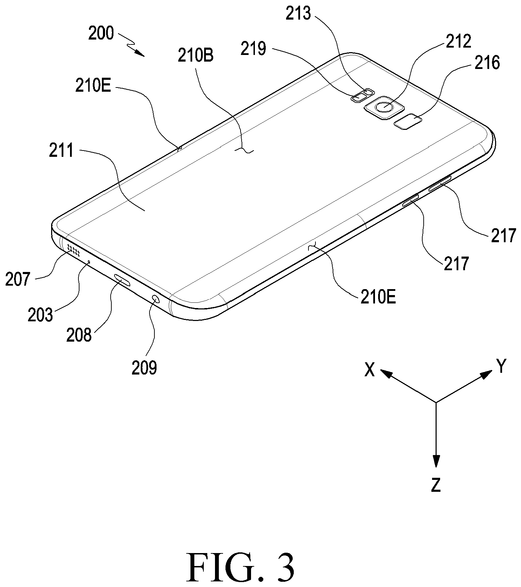

FIG. 2 is a front perspective view illustrating an electronic device 200 (e.g., the electronic device 101 in FIG. 1) according to various embodiments of the disclosure. FIG. 3 is a rear perspective view illustrating the electronic device 200 illustrated in FIG. 2.

Referring to FIGS. 2 and 3, the electronic device 200 according to an embodiment may include a housing 210 which includes a first surface (or front surface) 210A, a second surface (or rear surface) 210B, and side surfaces 210C surrounding a space between the first surface 210A and the second surface 210B. In an embodiment (not shown), the housing may refer to a structure that forms a portion of the first surface 210A, the second surface 210B, and the side surfaces 210C of FIG. 2. According to an embodiment, at least a portion of the first surface 210A may be formed by a front plate 202 (e.g., a glass plate or polymer plate including various coating layers) which is at least partially substantially transparent. The second surface 210B may be formed by a rear plate 211 which is substantially opaque. The rear plate 211 may be formed of, for example, coated or tinted glass, ceramic, a polymer, a metal (e.g., aluminum, stainless steel (STS), or magnesium), or a combination of at least two of these materials. The side surfaces 220C may be coupled to the front plate 202 and the rear plate 211 and formed by a side structure (or "side structure") 218 including a metal and/or a polymer. In an embodiment, the rear plate 211 and the side structure 218 may be integrally formed and include the same material (e.g., a metallic material such as aluminum).

In the illustrated embodiment, the front plate 202 may include two first areas 210D bent and extending seamlessly from the first surface 210A toward the rear plate 211 at both long edges of the front plate 202. In the illustrated embodiment (see FIG. 3), the rear plate 211 may include two second areas 210E bent and extending seamlessly from the second surface 210B toward the front plate 202 at both long edges thereof. In an embodiment, the front plate 202 (or the rear plate 211) may include only one of the first areas 210D (or the second areas 210E). In an embodiment, some of the first areas 210D or the second areas 210E may not be included. In these embodiments, when viewed from the sides of the electronic device 200, the side structure 218 may have a first thickness (or width) on side surfaces without the first areas 210D or the second areas 210E, and a second thickness smaller than the first thickness (or width) on side surfaces with the first areas 210D or the second areas 210E.

According to an embodiment, the electronic device 200 may include at least one of a display 201 (e.g., the display module 160 in FIG. 1), audio modules 203, 207, and 214 (e.g., the audio module 170 in FIG. 1), sensor modules 204, 216, and 219 (e.g., the sensor module 176 in FIG. 1), camera modules 205, 212, and 213 (e.g., the camera module 180 in FIG. 1), key input devices 217 (e.g., the input module 150 in FIG. 1), a light emitting element 206, or connector holes 208 and 209. In an embodiment, the electronic device 200 may not be provided with at least one (e.g., the key input devices 217 or the light emitting element 206) of the components or additionally include other components.

The display 201 may be visually exposed, for example, through a substantial portion of the front plate 202. In an embodiment, at least a portion of the display 201 may be exposed through the front plate 202 forming the first surface 210A or the first areas 210D of the side surfaces 210C. In an embodiment, corners of the display 201 may be formed substantially in the same shapes as those of adjacent peripheral portions of the front plate 202. In an embodiment (not shown), a gap between the periphery of the display 201 and the periphery of the front plate 202 may be substantially equal to increase the visually exposed area of the display 201.

In an embodiment (not shown), a recess or an opening may be formed in a portion of a screen display area of the display 201, and at least one of the audio module 214, the sensor module 204, the camera module 205, or the light emitting element 206, which is aligned with the recess or the opening, may be included. In an embodiment (not shown), at least one of the audio module 214, the sensor module 204, the camera module 205, a fingerprint sensor 216, or the light emitting element 206 may be included on a rear surface of the screen display area of the display 201. In an embodiment (not shown), the display 201 may be incorporated with or disposed adjacent to a touch sensing circuit, a pressure sensor that measures the intensity (pressure) of a touch, and/or a digitizer that detects a magnetic field-based stylus pen. In an embodiment, at least some of the sensor modules 204 and 219 and/or at least some of the key input devices 217 may be disposed in the first areas 210D and/or the second areas 210E.

The audio modules 203, 207, and 214 may include a microphone hole 203 and speaker holes 207 and 214. A microphone for obtaining an external sound may be disposed in the microphone hole 203, and in an embodiment, a plurality of microphones may be disposed to detect the direction of sound. The speaker holes 207 and 214 may include an external speaker hole 207 and a receiver hole 214 for calls. In an embodiment, the speaker holes 207 and 214 and the microphone hole 203 may be implemented as a single hole, or a speaker (e.g., a piezo speaker) may be included without the speaker holes 207 and 214.

The sensor modules 204, 216, and 219 may generate an electrical signal or data value corresponding to an internal operating state of the electronic device 200 or an external environmental state. The sensor modules 204, 216, and 219 may include, for example, a first sensor module 204 (e.g., a proximity sensor) and/or a second sensor module (not shown) (e.g., a fingerprint sensor), disposed on the first surface 210A, and/or a third sensor module 219 (e.g., an HRM sensor) and/or a fourth sensor module (not shown) (e.g., a fingerprint sensor), disposed on the second surface 210B of the housing 210. The fingerprint sensor may be disposed on the second surface 210B as well as on the first surface 210A (e.g., the display 201). The electronic device 200 may further include at least one of, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The camera modules 205, 212, and 213 may include a first camera device 205 disposed on the first surface 210A of the electronic device 200, and a second camera device 212 and/or a flash 213 disposed on the second surface 210B of the electronic device 200. The camera modules 205 and 212 may include one or more lenses, an image sensor, and/or an image signal processor. The flash 213 may include, for example, a light emitting diode (LED) or a xenon lamp. In an embodiment, two or more lenses (an IR camera, a wide-angle lens, and a telephoto lens) and image sensors may be arranged on one surface of the electronic device 200.

The key input devices 217 may be disposed on a side surface 210C of the housing 210. In an embodiment, the electronic device 200 may not include some or any of the above key input devices 217, and the key input devices 217 which are not included may be implemented in other forms such as soft keys on the display 201. In an embodiment, the key input devices 217 may include the sensor module 216 disposed on the second surface 210B of the housing 210.

The light emitting element 206 may be disposed, for example, on the first surface 210A of the housing 210. The light emitting element 206 may provide, for example, state information about the electronic device 200 in the form of light. In an embodiment, the light emitting element 206 may provide, for example, a light source interworking with an operation of the camera module 205. The light emitting element 206 may include, for example, an LED, an IR LED, and a xenon lamp.

The connector holes 208 and 209 may include a first connector hole 208 that may accommodate a connector (e.g., a universal serial bus (USB) connector) for transmitting and receiving power and/or data to and from an external electronic device, and a second connector hole (e.g., an earphone jack) 209 for transmitting and receiving an audio signal to and from an external electronic device.

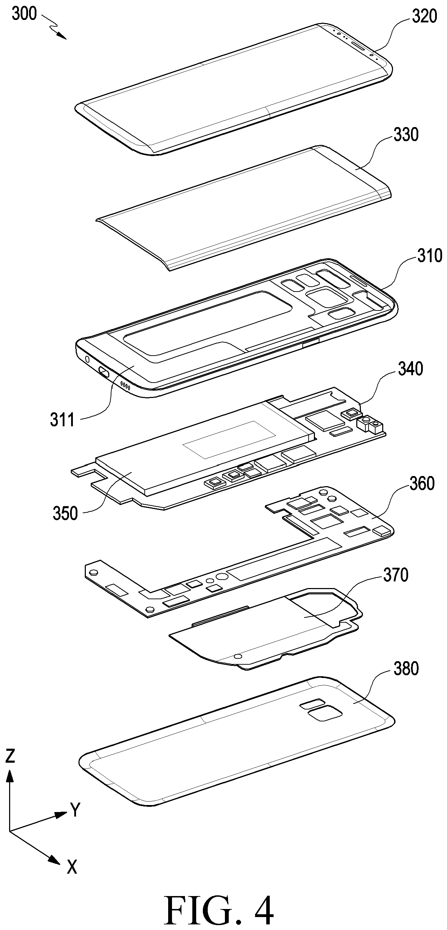

FIG. 4 is an exploded perspective view illustrating the electronic device 200 illustrated in FIG. 2.

Referring to FIG. 4, an electronic device 300 (e.g., the electronic devices 101 and 200 in FIGS. 1 to 3) may include a side structure 310 (e.g., the side surfaces 210C in FIG. 2), a first support member 311 (e.g., a bracket), a front plate 320, a display 330 (e.g., the display module 160 in FIG. 1 or the display 201 in FIG. 2), a PCB 340 (e.g., a printed board assembly (PBA), a flexible PCB (FPCB), or a rigid-flexible PCB (RFPCB), a battery 350 (e.g., the battery 189 in FIG. 1), a second support member 360 (e.g., a rear case), an antenna 370, and a rear plate 380. In an embodiment, the electronic device 300 may not be provided with at least one (e.g., the first support member 311 or the second support member 360) of the components or may additionally include other components. At least one of the components of the electronic device 300 may be the same as or similar to at least one of the components of the electronic device 200 of FIG. 2 or 3, and a redundant description will be avoided below.

The support member 311 may be disposed inside the electronic device 300 and connected to the side structure 310 or may be integrally formed with the side structure 310. For example, the first support member 311 may be formed of a metallic material and/or a non-metallic material (e.g., polymer). The first support member 311 may have one surface coupled to the display 330 and the other surface coupled to the PCB 340. A processor (e.g., the processor in FIG. 1), memory (e.g., the memory 130 in FIG. 1), and/or an interface (e.g., the interface 177 in FIG. 1) may be mounted on the PCB 340. The processor may include at least one of a CPU, an AP, a GPU, an ISP, a sensor hub processor, or a CP.

The memory may include, for example, volatile memory or non-volatile memory.

The interface may include, for example, a HDMI, a USB interface, an SD card interface, and/or an audio interface. The interface may, for example, electrically or physically connect the electronic device 300 to an external electronic device and include a USB connector, an SD card/MMC connector, or an audio connector.

The battery 350, which is a device that supplies power to at least one component of the electronic device 300, may include, for example, a non-rechargeable primary battery, a rechargeable secondary battery, or a fuel cell. At least a portion of the battery 350 may be disposed on substantially the same plane as, for example, the PCB 340. The battery 350 may be disposed integrally inside the electronic device 300 or detachably from the electronic device 300.

The antenna 370 may be disposed between the rear plate 380 and the battery 350. The antenna 370 may include, for example, a near field communication (NFC) antenna, a wireless charging antenna, and/or a magnetic secure transmission (MST) antenna. The antenna 370 may, for example, perform short-range communication with an external device or wirelessly transmit and receive power required for charging to and from an external device. In an embodiment, an antenna structure may be formed by a portion or combination of the side structure 310 and/or the first support member 311.

It is to be noted that in the following detailed description, reference may be made to the electronic devices 101, 200, and 300 of the preceding embodiments, the same reference numerals in the drawings or no reference numerals may be assigned to components that may be easily understood from the preceding embodiments, and a detailed description thereof may also be avoided.

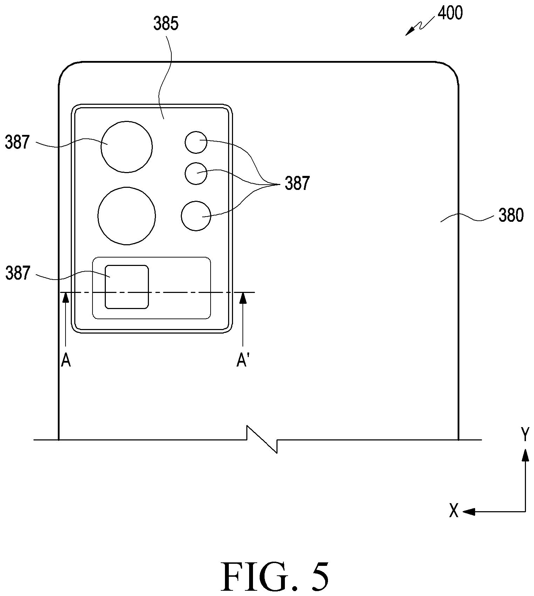

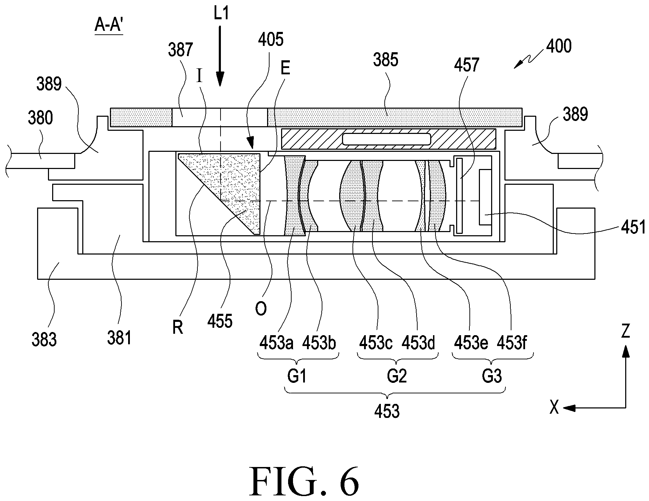

FIG. 5 is a plan view illustrating a rear surface of an electronic device 400 (e.g., the electronic devices 101, 200, and 300 in FIGS. 1 to 4) according to an embodiment of the disclosure. FIG. 6 is a cross-sectional view illustrating a portion of the electronic device 400, taken along line A-A' of FIG. 5.

Referring to FIGS. 5 and 6, the electronic device 400 according to an embodiment of the disclosure may include a camera window 385 disposed on one surface (e.g., the second surface 210B of FIG. 3) thereof. In an embodiment, the camera window 385 may be a portion of a rear plate 380. In an embodiment, the camera window 385 may be coupled to the rear plate 380 through a deco member 389, and when viewed from the outside, the deco member 389 may be exposed in a manner that surrounds the perimeter of the camera window 385. According to an embodiment, the camera window 385 may include a plurality of transparent areas 387, and the electronic device 400 may receive external light or emit light to the outside through at least one of the transparent areas 387. For example, the electronic device 400 may include at least one lens assembly or camera module 405 (e.g., the camera modules 180, 205, 212, and 213 in FIGS. 1 to 3) disposed to correspond to at least some of the transparent areas 387, and at least one light source (e.g., IR light source) disposed to correspond to others of the transparent areas 387. For example, the camera module or the light source may receive external light or emit light to the outside of the electronic device 400 through any one of the transparent areas 387.

According to an embodiment, the electronic device 400 may include, as the camera module 405 or a light receiving element, at least one of a lens assembly, such as a wide-angle camera, an ultra-wide-angle camera, a close-up camera, or a telephoto camera, or an IR photodiode, and may include a flash (e.g., the flash 213 in FIG. 3) or an IR laser diode as a light source or a light emitting element. In an embodiment, the electronic device 400 may detect the distance or depth of an object by emitting an IR laser toward the object and receiving an IR laser reflected from the object using the IR laser diode and the IR photodiode. In an embodiment, the electronic device 400 may obtain an image of an object by combining one or more of lens assemblies, for example, camera modules 405, and provide illumination toward the object using the flash as needed.

According to an embodiment, a wide-angle camera, an ultra-wide-angle camera, or a close-up camera among camera modules may have a smaller length in a direction of an optical axis O of lens(es) than a telephoto camera (e.g., the camera module 405). For example, the telephoto camera (e.g., the camera module 405) having a relatively large range of movement of the lens(es) for focal length adjustment or focus adjustment may secure a distance or area in which lens(es) 453 may move by securing a sufficient length or space in the direction of the optical axis O. In an embodiment, the wide-angle camera, the ultra-wide-angle camera, or the close-up camera may have a substantially small effect on the thickness of the electronic device 400 even if the lens(es) are arranged along a thickness direction (e.g., a direction of a thickness measured in the Z-axis direction in FIG. 4 or FIG. 6) of the electronic device 400. For example, the wide-angle camera, the ultra-wide-angle camera, or the close-up camera may be disposed in the electronic device 400 such that a direction L1 in which light is incident from the outside onto the electronic device 400 and the direction of the optical axis O of the lens(es) are substantially the same. In an embodiment, although the camera module 405 (e.g., the telephoto camera) may have a smaller angle of view than the wide-angle camera, the ultra-wide-angle camera, or the close-up camera, it may be useful for capturing an object at a greater distance, and may include more lenses 453 or have a greater distance of movement of the lens(es) 453 for focus adjustment. For example, when the lens(es) 453 of the camera module 405 are arranged in the thickness direction of the electronic device 400 (e.g., the Z-axis direction), the thickness of the electronic device 400 may increase, or the camera module 405 may protrude significantly outside the electronic device 400.

According to an embodiment, a folded camera (e.g., the camera module 405) may further include a reflective optical member (e.g., a reflective member 455) such as a prism, so that a direction in which the lens(es) 453 are arranged (e.g., the direction of the optical axis O in FIG. 6) may be designed or disposed to intersect the direction in which external light is incident (e.g., the incident direction L1 in FIG. 6). For example, the reflective member 455 may be disposed on an object side of a first lens group G1 and refract or reflect light incident from the outside, thereby guiding the light in the arrangement direction of the lens(es) 453 or to an image sensor 451.

According to an embodiment, the reflective member 455 may include an incident surface I facing an external space, an exit surface E facing the lenses 453, and/or a reflective surface R inclined with respect to the incident surface I or the exit surface E. For example, external light may be incident through the incident surface I and reflected by the reflective surface R, and the reflected light may travel in the direction of the optical axis O toward the lenses 453 or the image sensor 451 through the exit surface E. Depending on its shape or size, the electronic device 400 may not include the reflective member 455, and when the reflective member 455 is not included, the incident direction L1 may be substantially parallel to or coincident with the direction of the optical axis O.

According to an embodiment, the incident direction L1 may be substantially parallel to the thickness direction of the electronic device 400 (e.g., the Z-axis direction), and the arrangement direction of the lens(es) 453 (e.g., the direction of the optical axis O) may be a direction in which the light refracted or reflected by the reflective member 455 travels and intersect the incident direction L1. In an embodiment, the arrangement direction of the lens(es) 453 or the direction of the optical axis O may be substantially perpendicular to the incident direction L1 and parallel to the width direction (e.g., the X-axis direction in FIG. 4) or length direction (e.g., the Y-axis direction in FIG. 4) of the electronic device 400 or a housing (e.g., the housing 210 in FIG. 2). In an embodiment, the arrangement direction of the lens(es) 453 or the direction of the optical axis O may be designed to intersect the incident direction L1 at a non-perpendicular angle, and the reflective member 455 may be configured to internally reflect the incident light at least twice. The configuration in which the reflective member 455 reflects the incident light two or more times may be implemented in various ways depending on an inclination angle between the incident surface I, the reflective surface R, and/or the exit surface E, and in this case, the incident surface I or the exit surface E may function as another reflective surface inside the reflective member 455.

The lens assembly or camera module 405 illustrated in FIG. 6 is an example of a folded camera or a telephoto camera, in which the lens(es) 453 may be arranged to be movable forward and backward along the width direction of the electronic device 400 (e.g., in a direction parallel to the X axis or in the direction of the optical axis O). According to an embodiment, the camera module 405 may include the reflective member 455 that receives external light and refracts or reflects the light, the lens(es) 453 that focus the light refracted or reflected by the reflective member 455, and/or the image sensor 451 aligned on the optical axis O of the lens(es) 453. For example, the image sensor 451 may receive external light through the reflective member 455 and/or the lens(es) 453. In an embodiment, external light may be incident on the reflective member 455 along the incident direction L1, reflected or refracted by the reflective member 455, and guided along the direction of the optical axis O to the lens(es) 453 and/or the image sensor 451. For example, the lens(es) 453 may focus or guide the light reflected or refracted by the reflective member 455 to the image sensor 451.

According to an embodiment, the reflective member 455 may include, for example, a prism, and reflect or refract light incident in the incident direction L1 in a direction (e.g., in the direction of the optical axis O) substantially perpendicular to the incident direction L1. Although a configuration in which the incident direction L1 and the direction of the optical axis O are substantially perpendicular is exemplified in this embodiment, the embodiment(s) of the disclosure are not limited thereto, and the incident direction L1 and the direction of the optical axis O may intersect at various angles depending on the structure of the electronic device 400 or the housing (e.g., the housing 210 in FIG. 2).

In an embodiment, the reflective member 455 may track an object in telephoto shooting or perform a tremor correction operation by rotating around at least one axis. For example, when the reflective member 455 rotates around the optical axis O, the object may be tracked or a shooting direction or angle of view may be adjusted, and at least a part of the tremor correction operation may be implemented by rotationally vibrating around the optical axis O. According to an embodiment, the reflective member 455 may be configured to rotationally vibrate around at least one axis parallel to the Y axis in FIG. 5 or the Z axis in FIG. 6, thereby implementing at least another part of the tremor correction operation.

According to an embodiment, the camera module 405 may include a plurality of (e.g., at least three) lenses 453 arranged sequentially along the direction of the optical axis O from the object side to the side of the image sensor 451. In the illustrated embodiment, the first lens group G1 may include a first lens 453a and a second lens 453b among the lenses 453, a second lens group G2 may include a third lens 453c and a fourth lens 453d among the lenses 453, and/or a third lens group G3 may include a fifth lens 453e and a sixth lens 453f among the lenses 453. In an embodiment, the incident direction L1 may be parallel to the thickness direction of the electronic device 400 (e.g., the Z-axis direction), and the direction of the optical axis O may be parallel to the width direction (e.g., the X-axis direction) or length direction (e.g., the Y-axis direction) of the electronic device 400. Although the camera module 405 is configured to include six lenses 453 in FIG. 6, this is intended to illustrate a configuration in which one lens group G1, G2, or G3 includes a plurality of lenses, and it should be noted that the embodiment(s) of the disclosure are not limited thereto. For example, as long as conditions presented in various embodiments described below are satisfied, the number of lenses included in each of the lens groups G1, G2, and G3 may be appropriately selected.

According to an embodiment, the lens(es) 453 may be made of a synthetic resin material, thereby allowing a high degree of freedom in designing their sizes and shapes. The lens(es) 453 made of the synthetic resin material may have a resolution deviation depending on a change in temperature or humidity, and the lens assembly or camera module 405 (e.g., a telephoto camera) with a long focal length may have a greater resolution deviation than that of a standard camera or a wide-angle camera. According to an embodiment, when the camera module 405 implements a telephoto function, at least one of the lenses 453 of the first lens group G1 and/or at least one of the lenses of the second lens group G2 may be made of a glass material, thereby suppressing a resolution deviation depending on an operating environment. In an embodiment, in a structure in which the reflective member 455 is disposed in front of the lenses 453 (e.g., on the object side), at least a lens (e.g., the first lens 453a) disposed closest to the reflective member 455 among the lens(es) 453 may be made of a glass material.

According to an embodiment, at least one of the lens groups G1, G2, and G3 may move forward and backward along the direction of the optical axis O between the image sensor 451 and the reflective member 455. For example, at least one of the lens groups G1, G2, and G3 may execute a zoom function for focal length adjustment or perform a focus adjustment operation. In an embodiment, when the first lens 453a or the first lens group G1 disposed first on the object side is disposed to be visually exposed to the external space, the first lens group G1 may maintain a static state, and the electronic device 400 or the processor 120 of FIG. 1 may perform focal length adjustment or focus adjustment using the second lens group G2 and/or the third lens group G3. For example, the electronic device 400 or the processor 120 of FIG. 1 may adjust a focal length by moving at least one of the second lens group G2 or the third lens group G3 forward and backward in the direction of the optical axis O, and perform focus adjustment by moving the second lens group G2 or the third lens group G3 forward and backward in the direction of the optical axis O. In an embodiment, a focal length may be adjusted by moving the second lens group G2 and the third lens group G3 together along the direction of the optical axis O, and focus adjustment may be performed by moving one of the second lens group G2 and the third lens group G3 relative to the other along the direction of the optical axis O.

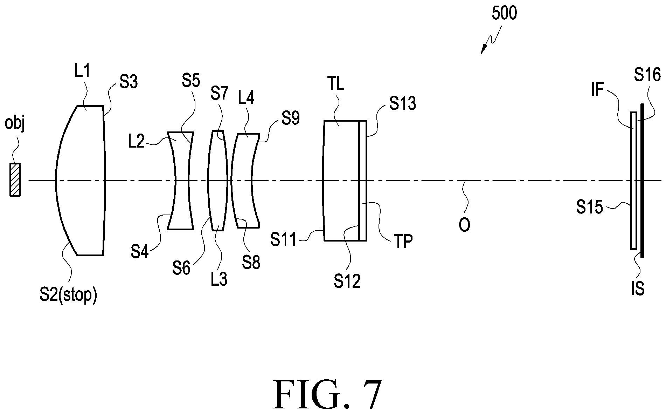

According to an embodiment, the lens assembly or camera module 405 may further include a tunable lens (e.g., a tunable lens TL in FIG. 7) which replaces the third lens group G3 or is disposed between the third lens group G3 and the image sensor 451. The tunable lens TL may have, for example, an adjustable refractive power or an adjustable curvature of at least one surface thereof, and the lens assembly or camera module 405 may perform a focus adjustment operation using the tunable lens TL. Since the tunable lens TL may implement the focus adjustment operation by adjusting the refractive power or curvature, there may be no need to secure a moving space in the focus adjustment operation. For example, the tunable lens TL may contribute to miniaturizing a telephoto camera (e.g., the camera module 405) while providing focus adjustment performance suitable for telephoto shooting or close-up shooting.

According to an embodiment, another optical member (e.g., the lens(es) 453) having refractive power may not be disposed between the tunable lens TL and the image sensor 451. In this case, measurement of optical characteristics or performance verification based on the combination of lens(es) 453 may be facilitated. For example, while it is practically impossible to verify the performance of the lens assembly without the tunable lens TL in a structure where the tunable lens TL is disposed between the lenses 453, it is easy to verify the performance based on the combination of lenses 453 in the disclosed embodiment, because no other optical member having refractive power is disposed between the tunable lens TL and the image sensor 451. Configurations of the lens assembly including the tunable lens TL will be described in more detail with reference to FIGS. 7 to 62.

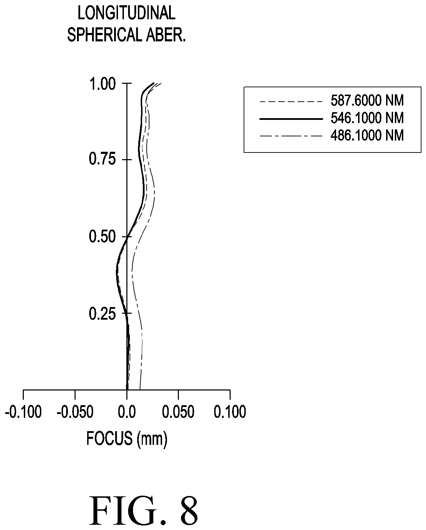

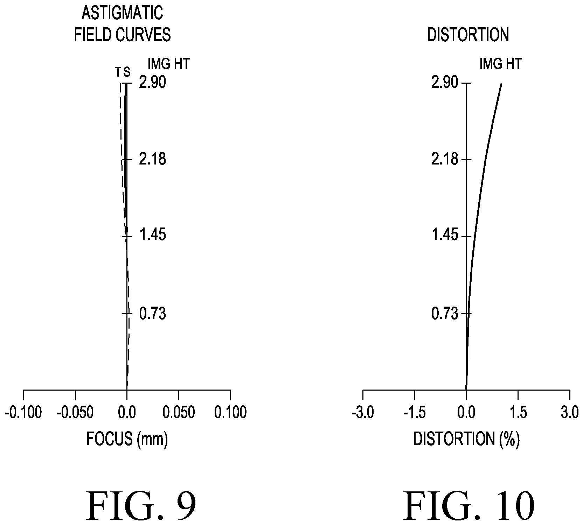

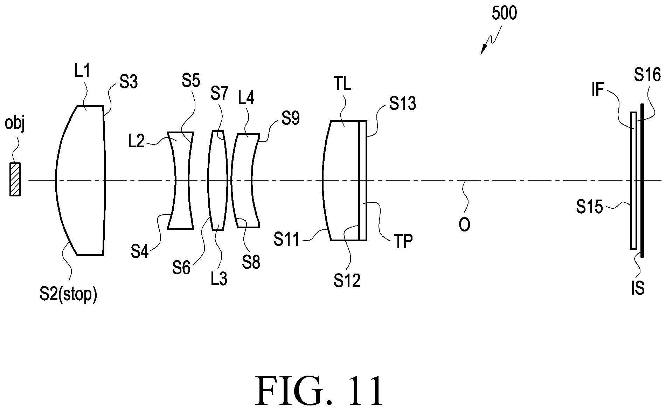

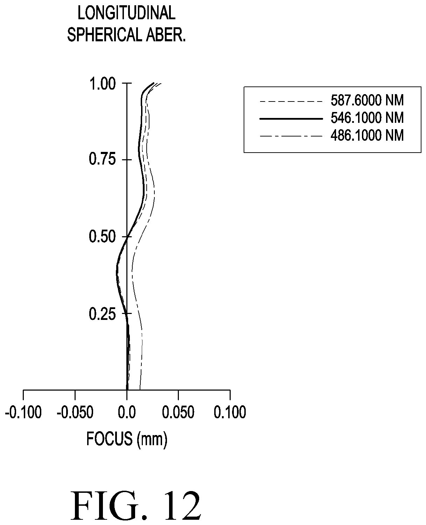

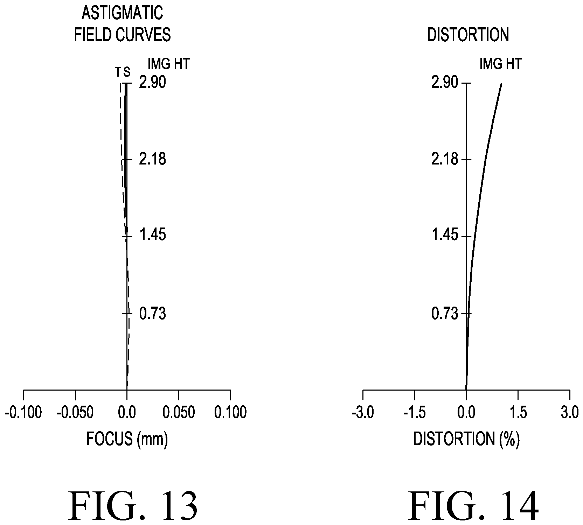

FIG. 7 is a diagram illustrating a lens assembly 500 (e.g., the camera module 405 in FIG. 6) according to an embodiment of the disclosure. FIG. 8 is a graph illustrating spherical aberration of the lens assembly 500 of FIG. 7. FIG. 9 is a graph illustrating astigmatism of the lens assembly 500 of FIG. 7. FIG. 10 is a graph illustrating distortion of the lens assembly 500 of FIG. 7. FIG. 11 is a diagram illustrating a close-up mode of the lens assembly 500 of FIG. 7. FIG. 12 is a graph illustrating spherical aberration of the lens assembly 500 of FIG. 11. FIG. 13 is a graph illustrating astigmatism of the lens assembly 500 of FIG. 11. FIG. 14 is a graph illustrating distortion of the lens assembly 500 of FIG. 11.

In the graphs of FIGS. 7 to 14 and/or graphs of various lens assemblies presented hereinafter, the spherical aberration is measured based on light in a wavelength of 587.6000nm, 546.1000nm, and/or 486.1000nm, and in the graphs of astigmatism, 'S' denotes a sagittal plane, and 'T' denotes a tangential plane. FIGS. 7 to 11 illustrate infinity aberration of the lens assembly 500 in a telephoto mode, and the 'close-up mode' of FIG. 11 refers to a state in which an object is captured at a distance of about 150mm. FIGS. 12 to 14 illustrate the aberration of the lens assembly 500 in the close-up mode.

Referring to FIGS. 7 to 14, the lens assembly 500 (e.g., the camera module 405 in FIG. 6) may include at least three lenses (e.g., four lenses L1, L2, L3 and/or L4) arranged sequentially along the direction of the optical axis O from the side of an object obj to the side of an image sensor IS, and a tunable lens TL disposed between the lenses L1, L2, L3 and/or L4 and the image sensor IS, and according to an embodiment, may further include a reflective optical member (e.g., the reflective member 455 in FIG. 6) disposed closer to the side of the object obj than to the lenses L1, L2, L3 and/or L4. The reflective optical member may reflect light incident in a direction (e.g., the incident direction L1 in FIG. 6) intersecting the direction of the optical axis O in the direction of the optical axis O, and the lenses L1, L2, L3, and/or L4 and the tunable lens TL may focus or guide the light reflected by the reflective optical member to the image sensor IS. In an embodiment, a focus adjustment operation may be implemented in the lens assembly 500 by changing the refractive power or curvature of the tunable lens TL. For example, the tunable lens TL may have a curvature changeable on an object-side surface S2 (stop) or image-side surface S3 thereof and/or a thickness adjustable along the optical axis O, and the lens assembly 500 may perform the focus adjustment operation using the tunable lens TL. In the illustrated embodiment, the curvature of the obj ect-side surface S11 of the tunable lens TL may be changed, and in embodiments described below, a structure in which the curvature of the image sensor-side surface of the tunable lens TL is changed may be exemplified, which may be easily understood by those skilled in the art from the drawings or lens data of each embodiment.

According to an embodiment, the lens assembly 500 may further include an IR cut filter IF disposed between the tunable lens TL and the image sensor IS. In an embodiment, the IR cut filter IF may be replaced with a band-pass filter that transmits IR light or a band-pass filter that transmits visible light. In an embodiment, no other optical member having refractive power (e.g., none of the lenses L1, L2, L3, and/or L4) may be disposed between the tunable lens TL and the image sensor IS. For example, the tunable lens TL may be disposed between a fourth lens L4 (e.g., a lens closest to the image sensor IS) among the lenses L1, L2, L3, and/or L4 and the image sensor IS.

According to an embodiment, the tunable lens TL may be disposed to directly face the fourth lens L4 and/or the image sensor IS, and when the IR cut filter IF is disposed, the IR cut filter IF may be disposed to directly face the tunable lens TL and/or the image sensor IS. In an embodiment, an additional reflective optical member may be disposed between the tunable lens TL and the image sensor IS. For example, the degree of freedom may be increased in designing a light incidence path from a first lens L1 (e.g., the first lens on the object side or the lens disposed closest to the reflective member 455 in FIG. 6) to the image sensor IS within the lens assembly 500. In this manner, other optical member(s) may be arranged between the tunable lens TL and the image sensor IS, and may not substantially have refractive power.

According to an embodiment, at least one (e.g., the first lens L1) of the lenses L1, L2, L3, and/or L4 may be made of a glass material, thereby suppressing a resolution deviation caused by an operating environment. In an embodiment, at least one of the lenses L1, L2, L3, and/or L4 may be made of a synthetic resin material, thereby facilitating implementation of a design shape. For example, the material of the lenses L1, L2, L3, and/or L4 may be appropriately selected in consideration of design specifications required for the lens assembly 500, ease of manufacturing, and/or manufacturing cost. When made of a glass material, the first lens L1 may have a refractive index equal to or greater than about 1.48 or and equal to or less than about 1.56.

According to an embodiment, the first lens L1 may satisfy the condition of [Equation 1] and/or [Equation 2] below.

[Equation 1]

$$1.8 \leq EFL/L1F1 \leq 4.2$$

[Equation 2]

$$-0.2 \leq L1S1/L1S2 \leq 0.5$$

Herein, 'EFL' is the effective focal length of the entire lens assembly 500, and 'L1F1' may be the focal length of the first lens on the object side or the lens (e.g., the first lens L1) disposed closest to the reflective member 455 of FIG. 6. In [Equation 2], 'L1S1' may be the radius of curvature of an object-side surface S2 of the first lens L1, and 'L1S2' may be the radius of curvature of an image sensor-side surface S3 of the first lens L1. When the value of [Equation 1] is less than about 1.8, it is difficult to control the aberration of the lens assembly 500, and the number of lenses should be increased for aberration control, thereby increasing manufacturing cost. When the value of [Equation 1] is greater than about 4.2, the sensitivity of the first lens L1 may increase, thereby making the manufacturing difficult. When the value of [Equation 2] is less than about -0.2, the spherical aberration may increase, causing deterioration of image quality, and when the value is greater than about 0.5, it may be difficult to miniaturize the lens assembly 500.

As described in [Table 1] below, the embodiments of the disclosure may satisfy the specifications of the first lens L1 described above or the conditions presented by [Equations],

[Table 1]

|  | Equation 1 | Equation 2 | Refractive index |
|---|---|---|---|
| Embodiment of FIG. 7 | 2.42859 | -0.080230 | 1.497 |
| Embodiment of FIG. 15 | 2.61732 | -0.077663 | 1.5441 |
| Embodiment of FIG. 23 | 3.44895 | -0.003166 | 1.55976 |
| Embodiment of FIG. 31 | 2.50782 | -0.015191 | 1.5441 |
| Embodiment of FIG. 39 | 2.32134 | 0.157609 | 1.5441 |
| Embodiment of FIG. 47 | 2.35617 | 0.138280 | 1.5441 |
| Embodiment of FIG. 55 | 2.57419 | -0.049456 | 1.5441 |

In an embodiment, it was identified that the lens assembly 500 satisfying the above-described conditions is capable of telephoto shooting, is easy to miniaturize, and provides good performance in the close-up mode. For example, when the lens assembly 500 captures an object at a distance of about 20cm in the close-up mode, it may obtain an image of quality equal to or higher than an image of an object captured at a distance of about 5cm in the close-up mode using a standard camera or a wide-angle camera. In an embodiment, although close-up shooting using the standard camera or the wide-angle camera has limitations in terms of a shooting direction or distance due to the shadow of the user or the camera, the lens assembly 500 may provide an environment in which close-up shooting is possible at a sufficient distance from an object. For example, the lens assembly 500 is capable of telephoto shooting and close-up shooting, is easy to miniaturize, and/or may eliminate limitations involved in close-up shooting while providing good image quality.

[Table 2] below describes lens data of the lens assembly 500 illustrated in FIG. 7, and the lens assembly 500 may have an effective focal length of 27.1mm, an f-number of 4.421, and/or an overall length of 24.4mm. The 'overall length of the lens assembly 500' may refer to the distance from the object-side surface S2 (stop) of the first lens L1 to the image sensor IS (e.g., an imaging surface) on the optical axis O. In [Table 2] below, 'radius of curvature' may be the radius of curvature of a lens surface measured at a point where the optical axis O passes, and 'thickness or air gap' may be the thickness of the lens L1, L2, L3, or L4 or the IR cut filter IF or the gap between two adjacent ones of the lenses L1, L2, L3, and L4, measured at a point where the optical axis O passes. A lens surface described in [Table 2] below but not illustrated in FIG. 7, for example, a lens surface denoted by 'S1' or 'S10', may be an exemplary structure that secures a cover plate or the lens(es) L1, L2, L3, and L4 of the lens assembly 500. While this surface may be considered in the design or manufacturing, it may not substantially affect the optical characteristics or performance of the lens assembly 500.

According to an embodiment, an aperture stop of the lens assembly 500 may be provided on the object-side surface S2 of the first lens L1, and 'S11' may denote an object-side surface of the tunable lens TL. 'S12' may denote an image sensor-side surface of the tunable lens TL or an object-side surface of a transparent plate TP. The transparent plate TP may be understood as a plate that encapsulates a liquid material forming the tunable lens TL, for example, and as a portion of the tunable lens TL according to an embodiment. In an embodiment, at least one of the lens surfaces S2, S3, S4, S5, S6, S7, S8, and S9 may be aspherical, and in [Table 2], an aspherical lens surface may be further labeled with a symbol '*'. [Table 3] below describes aspherical data of the lenses L1, L2, L3, and L4 or the lens surfaces S2, S3, S4, S5, S6, S7, S8, and S9, and an aspherical shape may be defined by [Equation 3] below.

$$[Equation\ 3]$$

$$x=\frac{c'z^2}{(1+\sqrt{1-(K+1)c'^2z^2}}+Az^4+Bz^6+Cz^8+Dz^{10}+Ez^{12}+Fz^{14}+Gz^{16}+Hz^{18}+Jz^{20}$$

In [Equation 3], 'x' may be the distance from a vertex of the lens L1, L2, L3, or L4 in the direction of the optical axis O, 'z' may be the distance from the vertex of the lens L1, L2, L3, or L4 in a direction perpendicular to the optical axis O, 'c"' may be the reciprocal (= 1/radius) of a radius of curvature at the vertex of the lens L1, L2, L3, or L4, 'K' may be a Conic constant, and 'A', 'B', 'C', 'D', 'E', 'F', 'G', 'H', and 'J' may be the aspherical coefficients of [Table 3].

[Table 2]

| Lens surface | Radius of curvature | Thickness or air gap | Effective focal length | Refractiv e index | Abbe number |
|---|---|---|---|---|---|
| obj | infinity | infinity | | | |
| S1 | infinity | 0.00000 | | | |
| S2(stop ) | 5.95837 | 2.00487 | 11.159 | 1.49700 | 81.61 |
| S3 | -74.26637 | 2.98500 | | | |
| S4* | -5.33511 | 0.50000 | -5.423 | 1.63917 | 23.49 |
| S5* | 10.55527 | 0.83943 | | | |
| S6* | 14.00089 | 0.80000 | 10.292 | 1.66075 | 20.38 |
| S7 | -13.21096 | 0.14911 | | | |
| S8* | 5.77770 | 0.84239 | -84.244 | 1.54401 | 55.99 |
| S9* | 4.86887 | 3.00000 | | | |
| S10 | infinity | 0.00000 | | | |
| S11 | 49.38013 | 1.50000 | 169.328 | 1.29100 | 113.39 |
| S12 | infinity | 0.30000 | infinity | 1.51680 | 64.2 |
| S13 | infinity | 0.00000 | | | |
| S14 | infinity | 11.00000 | | | |
| S15 | infinity | 0.21000 | infinity | 1.51680 | 64.2 |
| S16 | infinity | | | | |
| img | infinity | | | | |

[Table 3]

| Lens surface | S4 | S5 | S6 | S8 | S9 |
|---|---|---|---|---|---|
| Radius | -5.33511E+00 | 1.05553E+01 | 1.40009E+01 | 5.77770E+00 | 4.86887E+00 |
| K(Conic) | -1.82130E+00 | -4.54900E+00 | 5.55681E+00 | -1.61778E+00 | -1.86364E+00 |
| A(4th) | 8.50703E-04 | 6.63692E-05 | -8.48710E-04 | -1.81196E-03 | 2.08581E-04 |
| B(6th) | 2.57068E-05 | 6.67628E-04 | 1.34540E-03 | -9.51316E-04 | -2.83759E-04 |
| C(8th) | -6.52420E-06 | -2.04055E-04 | -7.98135E-04 | 9.49031E-05 | -2.23274E-04 |
| D(10th) | -1.15853E-05 | 6.37862E-07 | 3.78377E-04 | -1.97475E-05 | 8.17410E-05 |
| E(12th) | 2.18313E-06 | 5.19528E-06 | -1.26360E-04 | 4.18039E-06 | -3.12591E-05 |
| F(14th) | 1.40968E-07 | -3.37438E-07 | 2.27573E-05 | 1.11103E-06 | 1.00219E-05 |
| G(16th) | -1.28372E-08 | 5.26119E-08 | -1.21839E-06 | -2.54729E-07 | -2.57263E-07 |
| H(18th) | -5.25673E-09 | -1.02414E-08 | -1.73704E-07 | -7.79734E-08 | -5.47540E-07 |
| J(20th) | 7.06525E-11 | -7.75313E-10 | 1.94552E-08 | 1.50640E-08 | 7.84552E-08 |

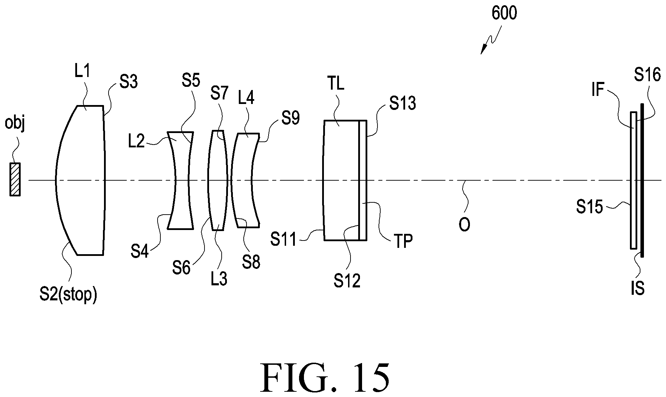

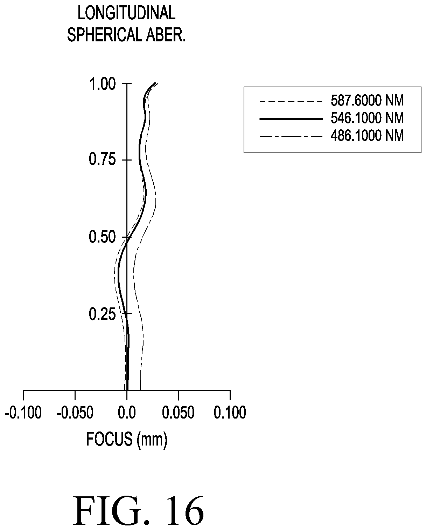

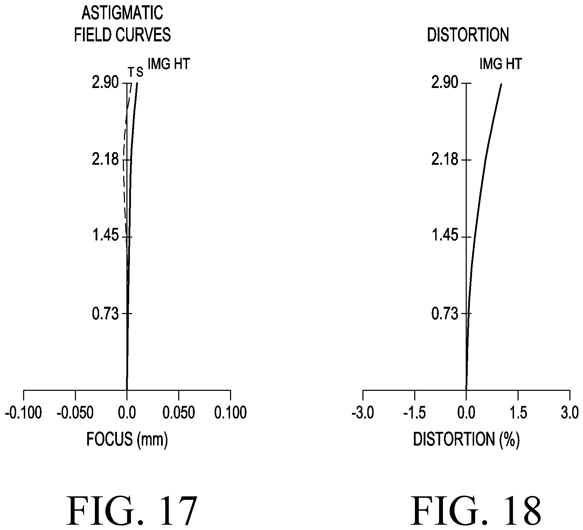

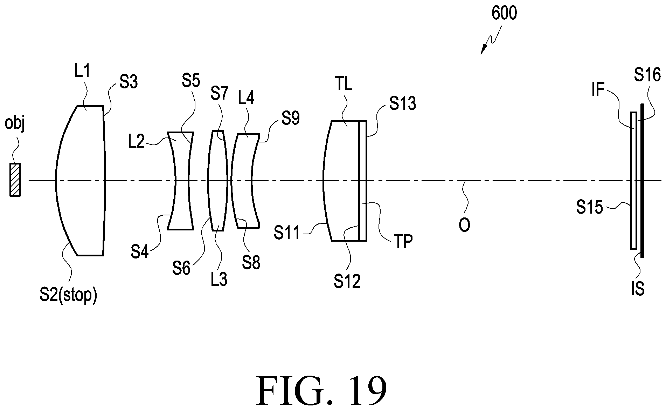

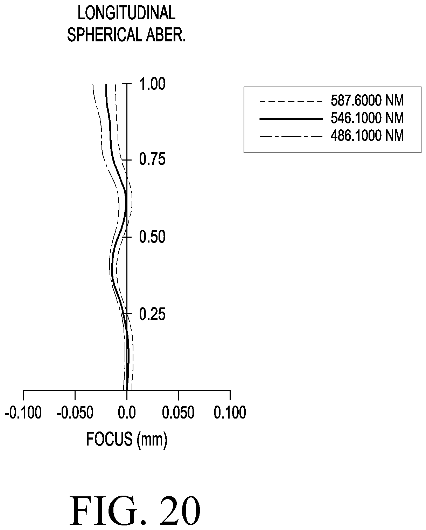

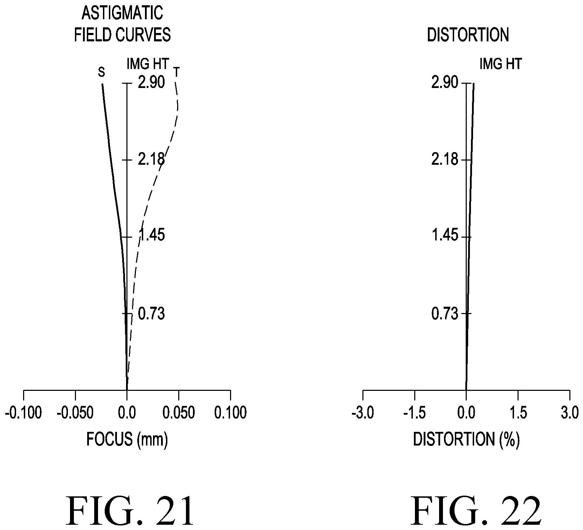

FIG. 15 is a diagram illustrating a lens assembly 600 according to an embodiment of the disclosure. FIG. 16 is a graph illustrating spherical aberration of the lens assembly 600 of FIG. 15. FIG. 17 is a graph illustrating astigmatism of the lens assembly 600 of FIG. 15. FIG. 18 is a graph illustrating distortion of the lens assembly 600 of FIG. 15. FIG. 19 is a diagram illustrating a close-up mode of the lens assembly 600 of FIG. 15. FIG. 20 is a graph illustrating spherical aberration of the lens assembly 600 of FIG. 19. FIG. 21 is a graph illustrating astigmatism of the lens assembly 600 of FIG. 19. FIG. 22 is a graph illustrating distortion of the lens assembly 600 of FIG. 19.

Referring to FIGS. 15 to 22, the lens assembly 600 (e.g., the camera module 405 in FIG. 6) may satisfy the configuration described in the afore-described embodiment or the conditions presented by [Equations], and include four lenses L1, L2, L3 and L4 and a tunable lens TL arranged sequentially from the side of an object obj. The lens assembly 600 may have an effective focal length of about 27.1mm, an f-number of about 4.404, and/or an overall length of about 24.4mm.

[Table 4] below describes lens data of the lens assembly 600 illustrated in FIG. 15, and [Table 5] describes aspherical coefficients of the lenses L1, L2, L3, and L4 or lens surfaces.

[Table 4]

| Lens surface | Radius of curvature | Thickness or air gap | Effective focal length | Refractiv e index | Abbe number |
|---|---|---|---|---|---|
| obj | infinity | infinity | | | |
| S1 | infinity | 0.00000 | | | |
| S2(stop ) | 6.04562 | 2.00487 | 10.355 | 1.54410 | 56.91 |
| S3 | -77.84407 | 2.75969 | | | |
| S4* | -5.83508 | 0.50000 | -4.933 | 1.68036 | 18.35 |
| S5* | 8.43074 | 1.07388 | | | |
| S6* | 10.60426 | 0.80000 | 8.452 | 1.67705 | 18.6 |
| S7 | -12.39034 | 0.12603 | | | |
| S8* | 6.52008 | 0.65692 | -34.549 | 1.54410 | 56.91 |
| S9* | 4.67371 | 3.36850 | | | |
| S10 | infinity | 0.00000 | | | |
| S11 | 55.96986 | 1.50000 | 191.924 | 1.29100 | 113.39 |
| S12 | infinity | 0.30000 | infinity | 1.51680 | 64.2 |
| S13 | infinity | 0.00000 | | | |
| S14 | infinity | 11.00000 | | | |
| S15 | infinity | 0.21000 | infinity | 1.51680 | 64.2 |
| S16 | infinity | | | | |
| img | infinity | | | | |

[Table 5]

| Lens surface | S4 | S5 | S6 | S8 | S9 |
|---|---|---|---|---|---|
| Radius | -5.83508E+00 | 8.43074E+00 | 1.06043E+01 | 6.52008E+00 | 4.67371E+00 |
| K(Conic) | -1.63096E+00 | -2.34234E+00 | 3.54155E+00 | -2.03876E+00 | -2.32021E+00 |
| A(4th) | 7.60267E-04 | 4.03320E-04 | -1.08508E-03 | -1.98385E-03 | -3.66873E-05 |
| B(6th) | 3.92464E-05 | 6.37749E-04 | 1.34373E-03 | -9.95374E-04 | -2.02796E-04 |
| C(8th) | -9.95026E-06 | -2.09565E-04 | -7.91609E-04 | 1.02000E-04 | -2.22830E-04 |
| D(10th) | -1.27605E-05 | 3.30210E-07 | 3.78779E-04 | -1.92077E-05 | 8.05308E-05 |
| E(12th) | 2.14541E-06 | 5.19828E-06 | -1.26424E-04 | 4.27331E-06 | -3.16451E-05 |
| F(14th) | 1.60839E-07 | -3.59295E-07 | 2.27149E-05 | 1.07095E-06 | 9.98947E-06 |
| G(16th) | -7.58264E-09 | 4.72265E-08 | -1.22686E-06 | -2.70050E-07 | -2.26329E-07 |
| H(18th) | -4.69863E-09 | -9.97585E-09 | -1.73964E-07 | -7.95016E-08 | -5.49601E-07 |
| J(20th) | 1.75426E-11 | -6.98945E-11 | 1.99886E-08 | 1.59312E-08 | 7.84552E-08 |

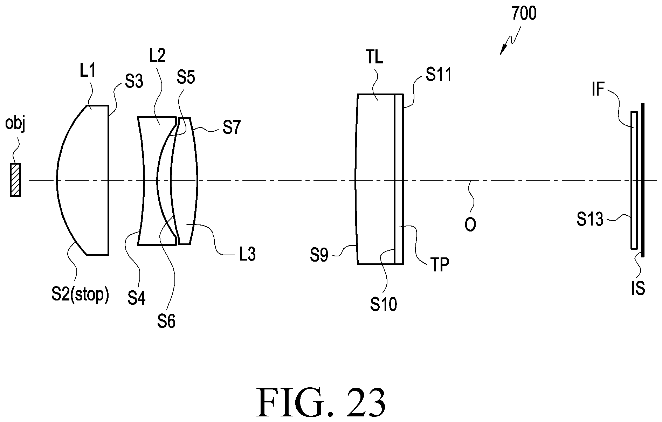

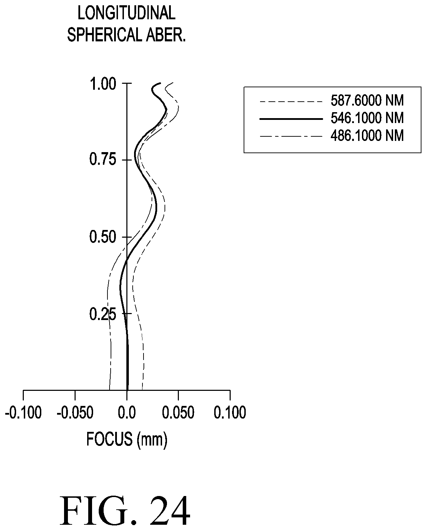

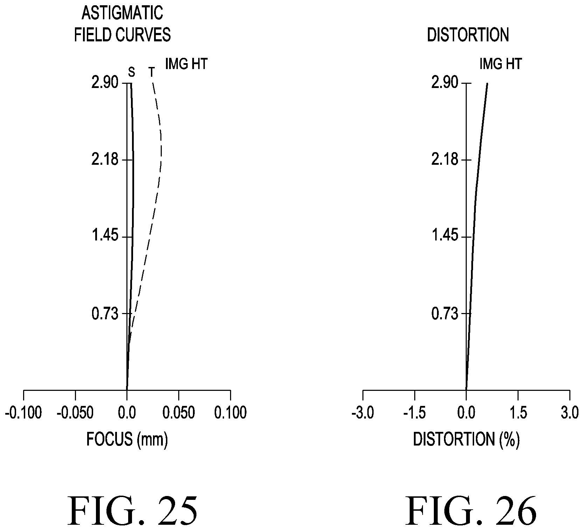

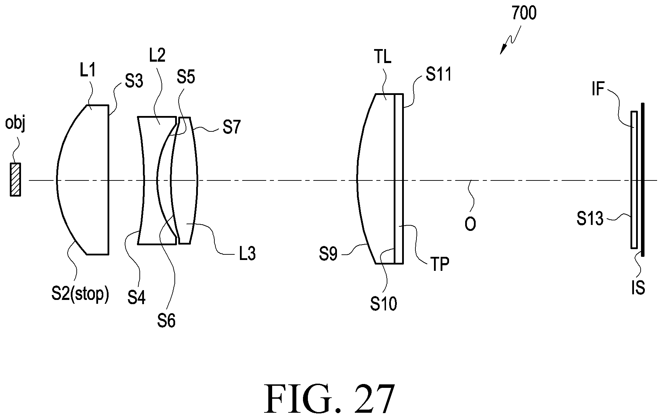

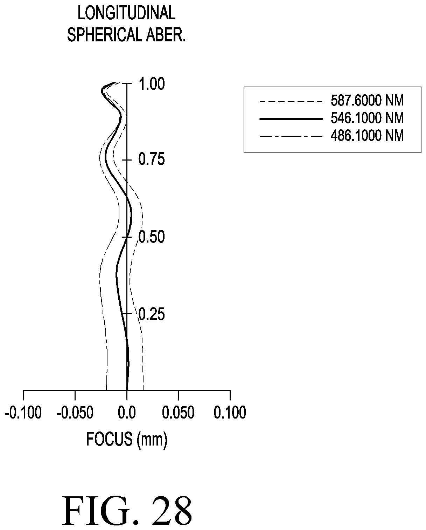

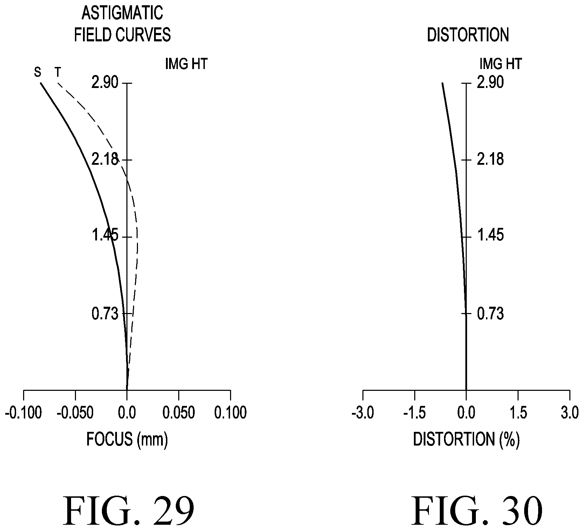

FIG. 23 is a diagram illustrating a lens assembly 700 according to an embodiment of the disclosure. FIG. 24 is a graph illustrating spherical aberration of the lens assembly 700 of FIG. 23. FIG. 25 is a graph illustrating astigmatism of the lens assembly 700 of FIG. 23. FIG. 26 is a graph illustrating distortion of the lens assembly 700 of FIG. 23. FIG. 27 is a diagram illustrating a close-up mode of the lens assembly 700 of FIG. 23. FIG. 28 is a graph illustrating spherical aberration of the lens assembly 700 of FIG. 27. FIG. 29 is a graph illustrating astigmatism of the lens assembly 700 of FIG. 27. FIG. 30 is a graph illustrating distortion of the lens assembly 700 of FIG. 27.

Referring to FIGS. 23 to 30, the lens assembly 700 (e.g., the camera module 405 in FIG. 6) may satisfy the configurations described in the afore-described embodiments or the conditions presented by [Equations], and include three lenses L1, L2, and L3 and a tunable lens TL arranged sequentially from the side of an object obj. The lens assembly 700 may have an effective focal length of about 27.1mm, an f-number of about 4.517, and/or an overall length of about 23.723mm.

[Table 6] below describes lens data of the lens assembly 700 illustrated in FIG. 23, and [Table 7] describes aspherical coefficients of the lenses L1, L2, and L3 or lens surfaces.

[Table 6]

| Lens surface | Radius of curvature | Thickness or air gap | Effective focal length | Refractiv e index | Abbe number |
|---|---|---|---|---|---|
| obj | infinity | infinity | | | |
| S1 | infinity | 0.00000 | | | |
| S2(stop ) | 4.42630 | 2.00487 | 7.857 | 1.55976 | 65.11 |
| S3 | -1398.12215 | 1.36705 | | | |
| S4* | -11.27744 | 0.50000 | -4.091 | 1.75502 | 27.61 |
| S5* | 4.38674 | 0.55171 | | | |
| S6* | 10.22411 | 1.00000 | 10.314 | 1.64247 | 21.88 |
| S7* | -18.67740 | 6.18940 | | | |
| S8 | infinity | 0.00000 | | | |
| S9 | 95.25378 | 1.50000 | 326.631 | 1.29100 | 113.39 |
| S10 | infinity | 0.30000 | infinity | 1.51680 | 64.2 |
| S11 | infinity | 0.00000 | | | |
| S12 | infinity | 10.00000 | | | |
| S13 | infinity | 0.21000 | infinity | 1.51680 | 64.2 |
| S14 | infinity | | | | |
| img | infinity | | | | |

[Table 7]

| Lens surface | S4 | S5 | S6 | S7 |
|---|---|---|---|---|
| Radius | -1.12774E+01 | 4.38674E+00 | 1.02241E+01 | -1.86774E+01 |
| K(Conic) | -4.42779E+00 | 3.34027E-01 | 6.45446E+00 | 2.34461E+01 |
| A(4th) | 7.73547E-04 | 2.29013E-03 | -3.78641E-04 | -9.00949E-05 |
| B(6th) | -3.49255E-05 | 9.99720E-04 | 1.12009E-03 | -6.95684E-05 |
| C(8th) | 5.22766E-06 | -2.25285E-04 | -7.35451E-04 | -1.08547E-05 |
| D(10th) | -1.21086E-05 | 4.39991E-06 | 3.82240E-04 | -1.38993E-06 |
| E(12th) | 2.07022E-06 | 6.67138E-06 | -1.27583E-04 | -2.34157E-07 |
| F(14th) | 1.54149E-07 | -2.14947E-07 | 2.25126E-05 | -5.57077E-08 |
| G(16th) | -1.64307E-08 | 2.28776E-08 | -1.21565E-06 | -1.05439E-08 |
| H(18th) | -7.92625E-09 | -1.97930E-08 | -1.65717E-07 | -1.13027E-09 |
| J(20th) | 7.63060E-10 | 1.71785E-10 | 1.85928E-08 | 1.41529E-10 |

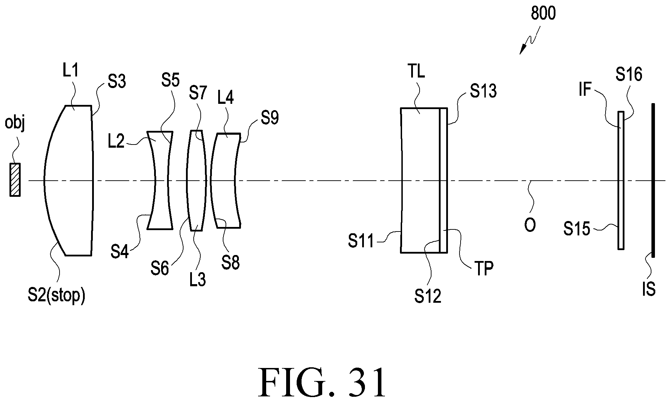

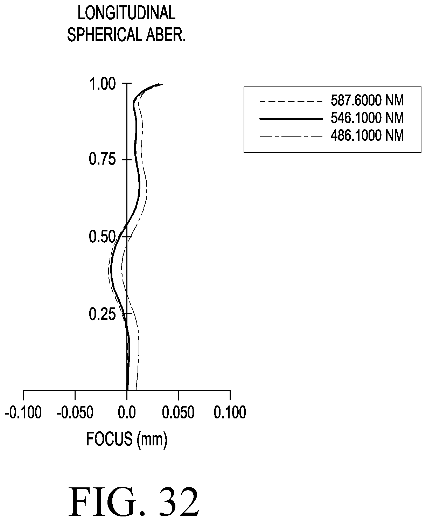

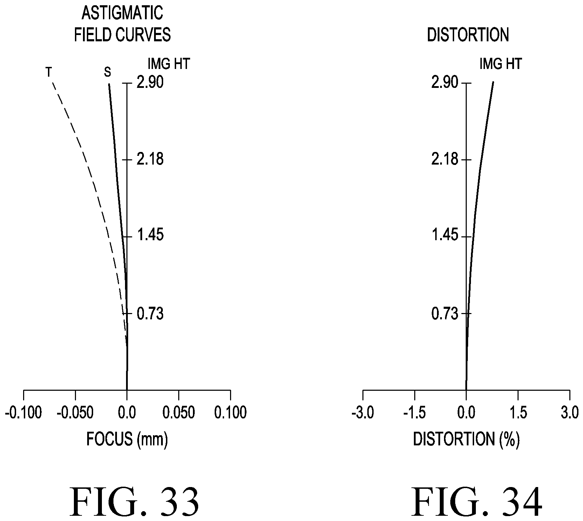

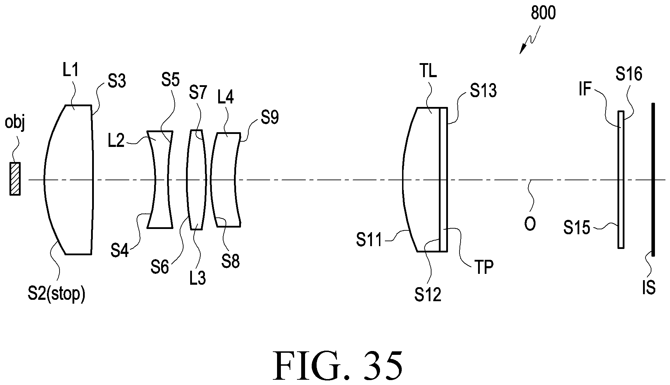

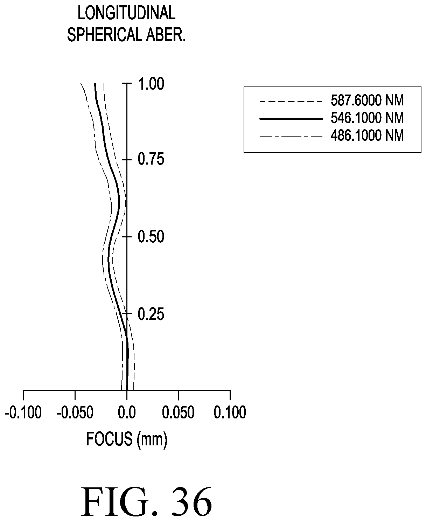

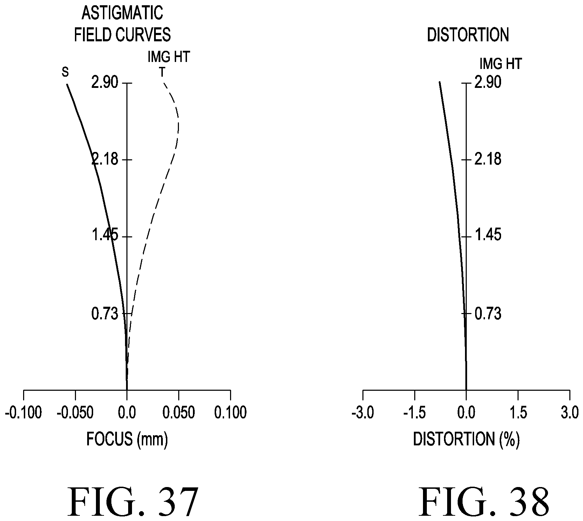

FIG. 31 is a diagram illustrating a lens assembly 800 according to an embodiment of the disclosure. FIG. 32 is a graph illustrating spherical aberration of the lens assembly 800 of FIG. 31. FIG. 33 is a graph illustrating astigmatism of the lens assembly 800 of FIG. 31. FIG. 34 is a graph illustrating distortion of the lens assembly 800 of FIG. 31. FIG. 35 is a diagram illustrating a close-up mode of the lens assembly 800 of FIG. 31. FIG. 36 is a graph illustrating spherical aberration of the lens assembly 800 of FIG. 35. FIG. 37 is a graph illustrating astigmatism of the lens assembly 800 of FIG. 35. FIG. 38 is a graph illustrating distortion of the lens assembly 800 of FIG. 35.

Referring to FIGS. 31 to 38, the lens assembly 800 (e.g., the camera module 405 in FIG. 6) may satisfy the configurations described in the afore-described embodiments or the conditions presented by [Equations], and include four lenses L1, L2, L3, and L4 and a tunable lens TL arranged sequentially from the side of an object obj. The lens assembly 800 may have an effective focal length of about 27.1mm, an f-number of about 4.697, and/or an overall length of about 24.4mm.

[Table 8] below describes lens data of the lens assembly 800 illustrated in FIG. 31, and [Table 9] and [Table 10] describe aspherical coefficients of the lenses L1, L2, L3, and L4 or lens surfaces.

[Table 8]

| Lens surface | Radius of curvature | Thickness or air gap | Effective focal length | Refracti ve index | Abbe number |
|---|---|---|---|---|---|
| obj | infinity | infinity | | | |
| S1 | infinity | 0.00000 | | | |
| S2(stop) * | 5.98360 | 2.00487 | 10.806 | 1.54410 | 56.91 |
| S3 | -393.90362 | 2.44419 | | | |
| S4* | -6.08510 | 0.50000 | -4.986 | 1.67574 | 18.7 |
| S5* | 8.02613 | 0.77259 | | | |
| S6* | 10.66425 | 0.80000 | 8.405 | 1.67994 | 18.38 |
| S7 | -12.27592 | 0.14855 | | | |
| S8* | 7.97388 | 0.95091 | -76.501 | 1.54757 | 53.38 |
| S9* | 6.41988 | 6.75493 | | | |
| S10 | infinity | 0.00000 | | | |
| S11 | -56.66247 | 1.50000 | -194.299 | 1.29100 | 113.39 |
| S12 | infinity | 0.30000 | infinity | 1.51680 | 64.2 |
| S13 | infinity | 0.00000 | | | |
| S14 | infinity | 7.00000 | | | |
| S15 | infinity | 0.21000 | infinity | 1.51680 | 64.2 |
| S16 | infinity | | | | |
| img | infinity | | | | |

[Table 9]

| Lens surface | S2 | S4 | S5 |
|---|---|---|---|
| Radius | 5.98360E+00 | -6.08510E+00 | 8.02613E+00 |
| K(Conic) | 2.10147E-02 | -1.88440E+00 | -3.12727E+00 |
| A(4th) | 2.00383E-05 | 8.95523E-04 | 2.50185E-04 |
| B(6th) | 7.03454E-07 | 5.72853E-05 | 6.31433E-04 |
| C(8th) | -4.01076E-08 | -6.86982E-06 | -2.07650E-04 |
| D(10th) | -9.71647E-09 | -1.21916E-05 | 8.95568E-07 |
| E(12th) | 1.95462E-10 | 2.12743E-06 | 5.22897E-06 |
| F(14th) | 1.42012E-10 | 1.48645E-07 | -3.41719E-07 |

(continued)

| Lens surface | S2 | S4 | S5 |
|---|---|---|---|
| G(16th) | 1.17516E-11 | -9.90874E-09 | 5.10417E-08 |
| H(18th) | -1.69825E-12 | -4.91107E-09 | -1.01374E-08 |
| J(20th) | 0.00000E+00 | -1.93055E-11 | -5.37489E-10 |

[Table 10]

| Lens surface | S6 | S8 | S9 |
|---|---|---|---|
| Radius | 1.06643E+01 | 7.97388E+00 | 6.41988E+00 |
| K(Conic) | 3.75248E+00 | -1.79291E+00 | -2.43103E+00 |
| A(4th) | -1.03439E-03 | -1.92431E-03 | -1.09978E-04 |
| B(6th) | 1.33444E-03 | -9.94109E-04 | -2.19365E-04 |
| C(8th) | -7.96423E-04 | 9.87455E-05 | -2.19428E-04 |
| D(10th) | 3.78249E-04 | -1.90314E-05 | 8.20222E-05 |
| E(12th) | -1.26424E-04 | 4.30212E-06 | -3.15056E-05 |
| F(14th) | 2.27343E-05 | 1.12229E-06 | 9.96396E-06 |
| G(16th) | -1.22181E-06 | -2.55247E-07 | -2.26003E-07 |
| H(18th) | -1.73506E-07 | -7.85001E-08 | -5.46347E-07 |
| J(20th) | 1.98032E-08 | 1.48031E-08 | 7.75575E-08 |

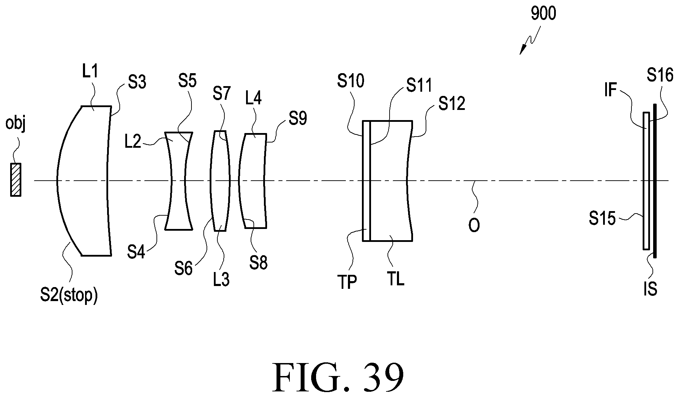

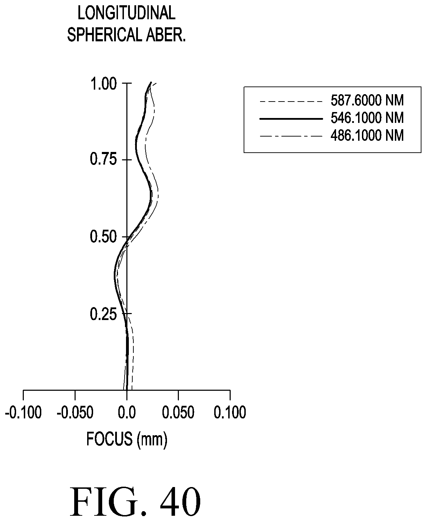

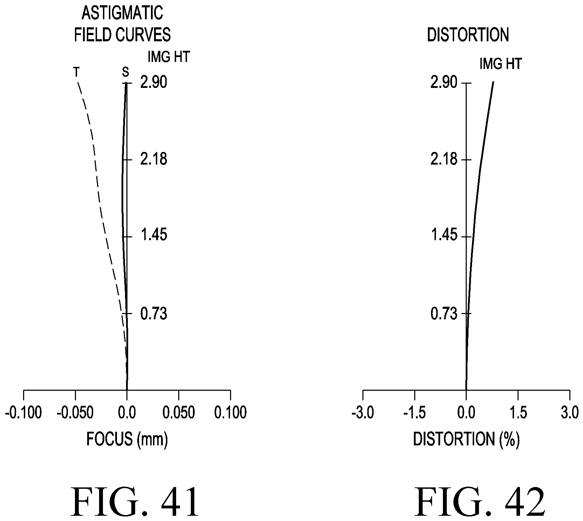

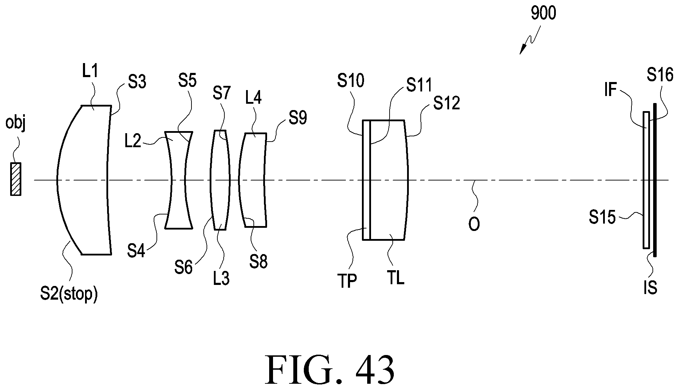

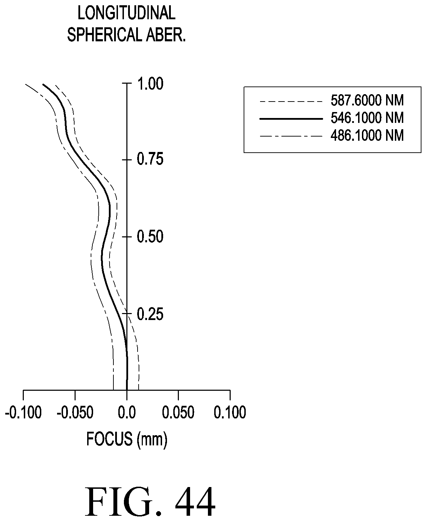

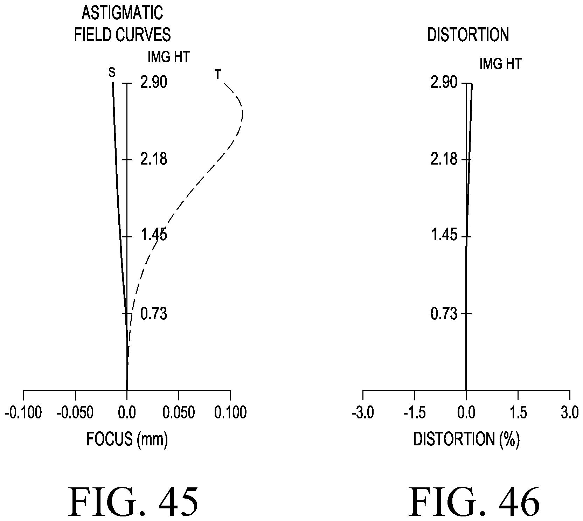

FIG. 39 is a diagram illustrating a lens assembly 900 according to an embodiment of the disclosure. FIG. 40 is a graph illustrating spherical aberration of the lens assembly 900 of FIG. 39. FIG. 41 is a graph illustrating astigmatism of the lens assembly 900 of FIG. 39. FIG. 42 is a graph illustrating distortion of the lens assembly 900 of FIG. 39. FIG. 43 is a diagram illustrating a close-up mode of the lens assembly 900 of FIG. 39. FIG. 44 is a graph illustrating spherical aberration of the lens assembly 900 of FIG. 43. FIG. 45 is a graph illustrating astigmatism of the lens assembly 900 of FIG. 43. FIG. 46 is a graph illustrating distortion of the lens assembly 900 of FIG. 43.

Referring to FIGS. 39 to 46, the lens assembly 900 (e.g., the camera module 405 in FIG. 6) may satisfy the configurations described in the afore-described embodiment or the conditions presented by [Equations], and include four lenses L1, L2, L3 and L4 and a tunable lens TL arranged sequentially from the side of an object obj. The lens assembly 900 may have an effective focal length of about 27.1mm, an f-number of about 4.66, and/or an overall length of about 24.176mm.

[Table 11] below describes lens data of the lens assembly 900 illustrated in FIG. 39, and [Table 12] and [Table 13] describe aspherical coefficients of the lenses L1, L2, L3, and L4 or lens surfaces.

[Table 11]

| Lens surface | Radius of curvature | Thickness or air gap | Effective focal length | Refracti ve index | Abbe number |
|---|---|---|---|---|---|
| obj | infinity | infinity | | | |
| S1 | infinity | 0.00000 | | | |
| S2(stop) * | 5.50291 | 2.00487 | 11.674 | 1.54410 | 56.91 |
| S3 | 34.91499 | 2.53415 | | | |
| S4* | -7.62917 | 0.50000 | -5.352 | 1.66200 | 19.86 |
| S5* | 6.94276 | 1.00000 | | | |
| S6* | 10.58581 | 0.80000 | 9.670 | 1.66111 | 19.92 |
| S7 | -16.13508 | 0.36195 | | | |
| S8* | 10.46084 | 1.00000 | 84.102 | 1.54410 | 56.91 |

(continued)

| Lens surface | Radius of curvature | Thickness or air gap | Effective focal length | Refracti ve index | Abbe number |
|---|---|---|---|---|---|
| S9* | 13.08651 | 3.86509 | | | |
| S10 | infinity | 0.30000 | infinity | 1.51680 | 64.2 |
| S11 | infinity | 1.50000 | -42.618 | 1.29100 | 113.39 |
| S12 | 12.42837 | 0.00000 | | | |
| S13 | infinity | 0.00000 | | | |
| S14 | infinity | 10.00000 | | | |
| S15 | infinity | 0.21000 | infinity | 1.51680 | 64.2 |
| S16 | infinity | 0.08 | | | |
| img | infinity | 0.02 | | | |

[Table 12]

| Lens surface | S2 | S4 | S5 |
|---|---|---|---|
| Radius | 5.50291E+00 | -7.62917E+00 | 6.94277E+00 |
| K(Conic) | 1.15512E-02 | -1.72556E+00 | -1.95383E+00 |
| A(4th) | 3.25497E-06 | 8.21472E-04 | 4.84097E-04 |
| B(6th) | 2.00835E-06 | 5.31073E-05 | 6.54156E-04 |
| C(8th) | 1.25457E-07 | -7.90120E-06 | -2.03839E-04 |
| D(10th) | -1.50665E-08 | -1.23388E-05 | 2.07792E-06 |
| E(12th) | -1.31723E-10 | 2.14620E-06 | 5.54160E-06 |
| F(14th) | 1.73858E-10 | 1.44949E-07 | -3.29962E-07 |
| G(16th) | 1.39452E-11 | -7.60311E-09 | 4.17121E-08 |
| H(18th) | -1.72119E-12 | -4.33703E-09 | -1.42708E-08 |
| J(20th) | 0.00000E+00 | -1.04456E-10 | 1.65823E-10 |

[Table 13]

| Lens surface | S6 | S8 | S9 |
|---|---|---|---|
| Radius | 1.05858E+01 | 1.04608E+01 | 1.30865E+01 |
| K(Conic) | 3.60494E+00 | -1.11159E+00 | -6.99115E+00 |
| A(4th) | -1.06756E-03 | -1.80081E-03 | -8.99940E-04 |
| B(6th) | 1.33361E-03 | -1.04462E-03 | -1.81914E-04 |
| C(8th) | -7.86464E-04 | 1.08267E-04 | -2.19838E-04 |
| D(10th) | 3.79908E-04 | -1.76313E-05 | 8.30735E-05 |
| E(12th) | -1.26361E-04 | 4.08996E-06 | -3.07189E-05 |
| F(14th) | 2.27287E-05 | 9.90631E-07 | 1.00113E-05 |
| G(16th) | -1.22486E-06 | -2.87592E-07 | -3.70271E-07 |
| H(18th) | -1.74672E-07 | -8.12811E-08 | -5.31739E-07 |
| J(20th) | 1.99269E-08 | 1.70427E-08 | 7.84553E-08 |

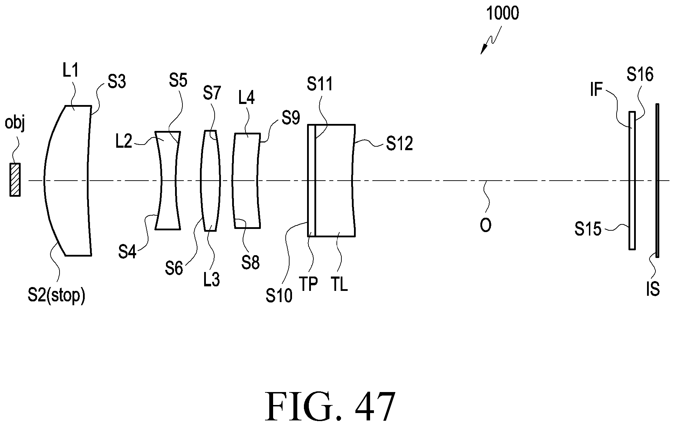

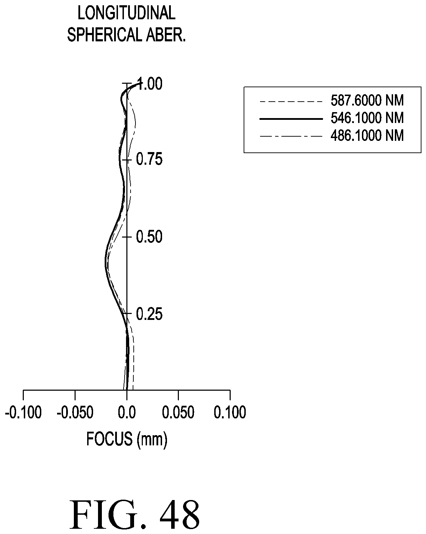

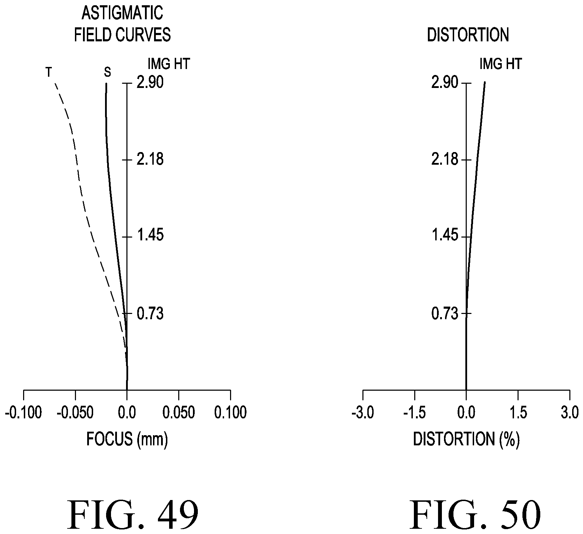

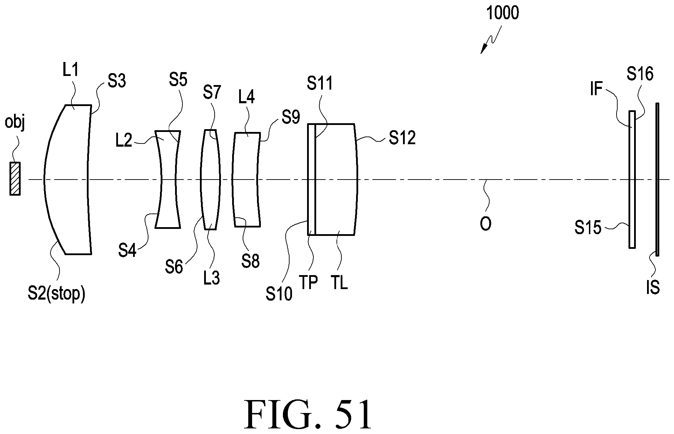

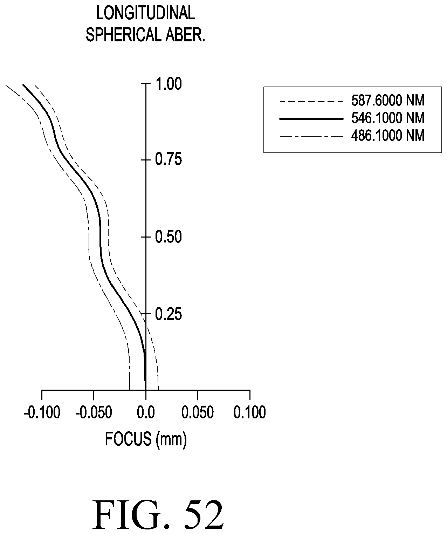

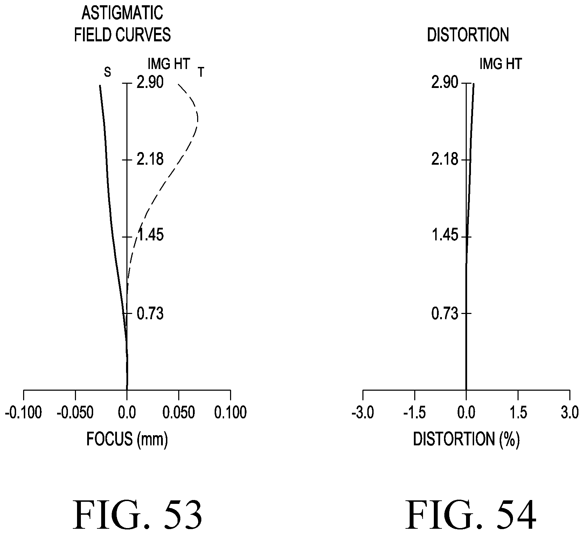

FIG. 47 is a diagram illustrating a lens assembly 1000 according to an embodiment of the disclosure. FIG. 48 is a graph illustrating spherical aberration of the lens assembly 1000 of FIG. 47. FIG. 49 is a graph illustrating astigmatism of the lens assembly 1000 of FIG. 47. FIG. 50 is a graph illustrating distortion of the lens assembly 1000 of FIG. 47. FIG. 51 is a diagram illustrating a close-up mode of the lens assembly 1000 of FIG. 47. FIG. 52 is a graph illustrating spherical aberration of the lens assembly 1000 of FIG. 51. FIG. 53 is a graph illustrating astigmatism of the lens assembly 1000 of FIG. 51. FIG. 54 is a graph illustrating distortion of the lens assembly 1000 of FIG. 51.

Referring to FIGS. 47 to 54, the lens assembly 1000 (e.g., the camera module 405 in FIG. 6) may satisfy the configurations described in the afore-described embodiments or the conditions presented by [Equations], and include four lenses L1, L2, L3, and L4 and a tunable lens TL arranged sequentially from the side of an object obj. The lens assembly 1000 may have an effective focal length of about 27.1mm, an f-number of about 4.547, and/or an overall length of about 24.4mm.

[Table 14] below describes lens data of the lens assembly 1000 illustrated in FIG. 47, and [Table 15] and [Table 16] describe aspherical coefficients of the lenses L1, L2, L3, and L4 or lens surfaces.

[Table 14]

| Lens surface | Radius of curvature | Thickness or air gap | Effective focal length | Refracti ve index | Abbe number |
|---|---|---|---|---|---|
| obj | infinity | infinity | | | |
| S1 | infinity | 0.00000 | | | |
| S2(stop) * | 5.52691 | 2.00487 | 11.502 | 1.54410 | 56.91 |
| S3 | 39.96888 | 2.67674 | | | |
| S4* | -7.36714 | 0.50000 | -5.328 | 1.67268 | 18.95 |
| S5* | 7.34975 | 1.00000 | | | |
| S6* | 11.06485 | 0.80000 | 9.740 | 1.67946 | 18.42 |
| S7 | -16.50586 | 0.49578 | | | |
| S8* | 10.18204 | 1.00000 | 142.155 | 1.54436 | 56.62 |
| S9* | 11.31050 | 2.00000 | | | |
| S10 | infinity | 0.30000 | infinity | 1.51680 | 64.2 |
| S11 | infinity | 1.50000 | -66.617 | 1.29100 | 113.39 |
| S12 | 19.42723 | 0.00000 | | | |
| S13 | infinity | 0.00000 | | | |
| S14 | infinity | 11.00000 | | | |
| S15 | infinity | 0.21000 | infinity | 1.51680 | 64.2 |
| S16 | infinity | | | | |
| img | infinity | | | | |

[Table 15]

| Lens surface | S2 | S4 | S5 |
|---|---|---|---|
| Radius | 5.52691E+00 | -7.36714E+00 | 7.34975E+00 |
| K(Conic ) | 1.71012E-02 | -1.58042E+00 | -1.87776E+00 |
| A(4th) | 1. 13941E-05 | 7.81885E-04 | 5.10521E-04 |
| B(6th) | 2.68971E-06 | 4.57801E-05 | 6.60473E-04 |
| C(8th) | 2.46596E-09 | -7.85584E-06 | -2.04877E-04 |
| D(10th) | -2.16430E-08 | -1.23672E-05 | 1.49402E-06 |
| E(12th) | 1.82336E-10 | 2.18221E-06 | 5.55448E-06 |
| F(14th) | 2.75243E-10 | 1.51302E-07 | -3.13982E-07 |

(continued)

| Lens surface | S2 | S4 | S5 |
|---|---|---|---|
| G(16th) | 2.09185E-11 | -1.01439E-08 | 4.63391E-08 |
| H(18th) | -2.85304E-12 | -4.20678E-09 | -1.38603E-08 |
| J(20th) | 0.00000E+00 | -9.20786E-11 | -1.39999E-10 |

[Table 16]

| Lens surface | S6 | S8 | S9 |
|---|---|---|---|
| Radius | 1.10649E+01 | 1.01820E+01 | 1.13105E+01 |
| K(Conic ) | 3.46873E+00 | -1.24451E+00 | -7.43573E+00 |
| A(4th) | -1.08832E-03 | -1.81436E-03 | -9.42123E-04 |
| B(6th) | 1.33219E-03 | -1.04878E-03 | -1.85093E-04 |
| C(8th) | -7.86168E-04 | 1.07196E-04 | -2.21934E-04 |
| D(10th) | 3.79878E-04 | -1.82648E-05 | 8.24658E-05 |
| E(12th) | -1.26280E-04 | 4.14195E-06 | -3.06682E-05 |
| F(14th) | 2.27183E-05 | 1.00323E-06 | 1.00471E-05 |
| G(16th) | -1.22755E-06 | -2.83334E-07 | -3.80225E-07 |
| H(18th) | -1.74983E-07 | -8.04540E-08 | -5.29703E-07 |
| J(20th) | 1.99948E-08 | 1.68451E-08 | 7.84553E-08 |

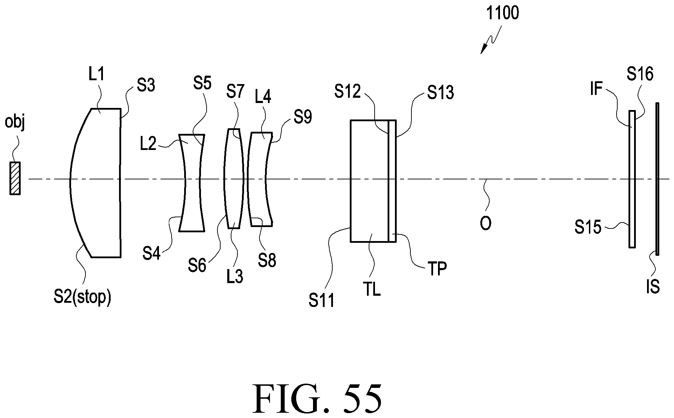

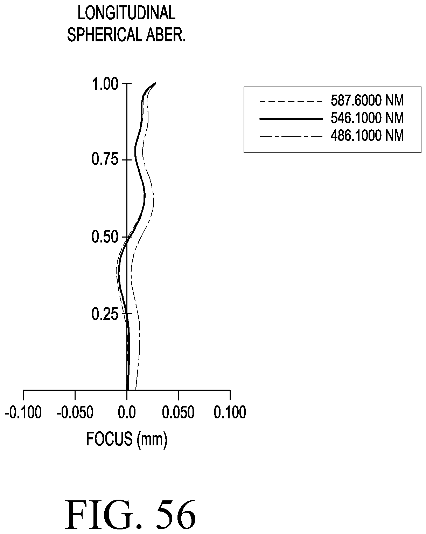

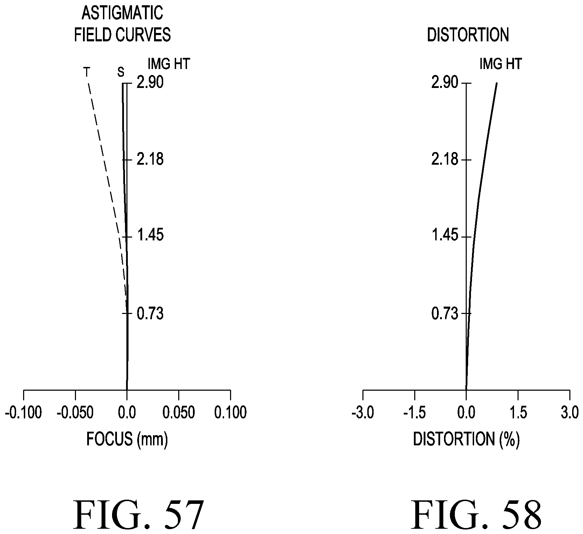

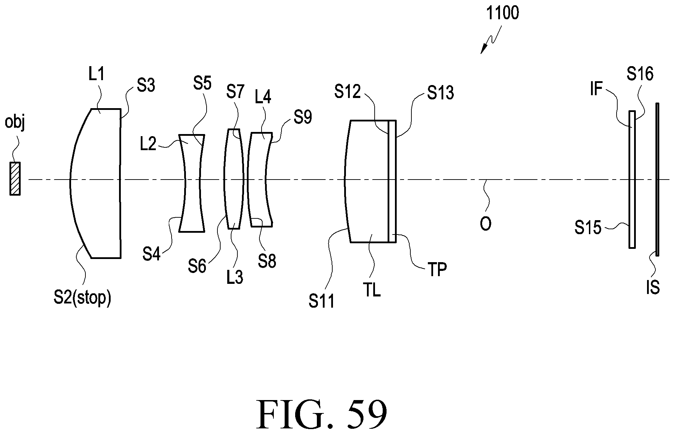

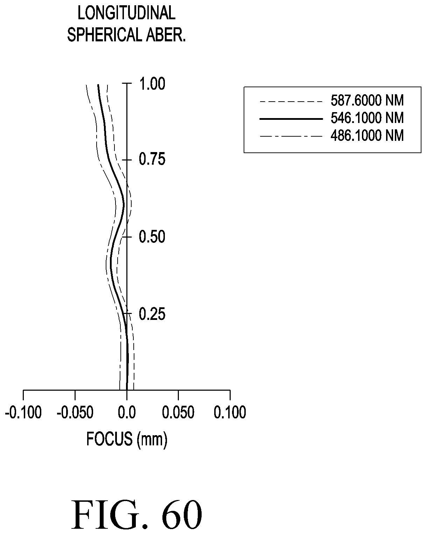

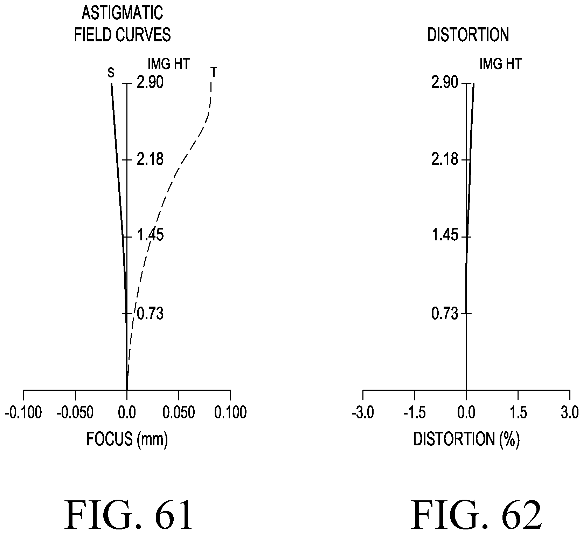

FIG. 55 is a diagram illustrating a lens assembly 1100 according to an embodiment of the disclosure. FIG. 56 is a graph illustrating spherical aberration of the lens assembly 1100 of FIG. 55. FIG. 57 is a graph illustrating astigmatism of the lens assembly 1100 of FIG. 55. FIG. 58 is a graph illustrating distortion of the lens assembly 1100 of FIG. 55. FIG. 59 is a diagram illustrating a close-up mode of the lens assembly 1100 of FIG. 55. FIG. 60 is a graph illustrating spherical aberration of the lens assembly 1100 of FIG. 59. FIG. 62 is a graph illustrating astigmatism of the lens assembly 1100 of FIG. 59. FIG. 62 is a graph illustrating distortion of the lens assembly 1100 of FIG. 59.

Referring to FIGS. 55 to 62, the lens assembly 1100 (e.g., the camera module 405 in FIG. 6) may satisfy the configurations described in the afore-described embodiments or the conditions presented by [Equations], and include four lenses L1, L2, L3, and L4 and a tunable lens TL arranged sequentially from the side of an object obj. The lens assembly 1100 may have an effective focal length of about 27.1mm, an f-number of about 4.705, and/or an overall length of about 24.4mm.

[Table 17] below describes lens data of the lens assembly 1100 illustrated in FIG. 55, and [Table 18] describes aspherical coefficients of the lenses L1, L2, L3, and L4 or lens surfaces.

[Table 17]

| Lens surface | Radius of curvature | Thickness or air gap | Effective focal length | Refracti ve index | Abbe number |
|---|---|---|---|---|---|
| obj | infinity | infinity | | | |
| S1 | infinity | 0.00000 | | | |
| S2(stop ) | 6.00475 | 2.00487 | 10.530 | 1.54410 | 56.91 |
| S3 | -121.41699 | 2.67627 | | | |
| S4* | -6.18962 | 0.50000 | -4.951 | 1.67873 | 18.47 |
| S5* | 7.81150 | 0.99161 | | | |
| S6* | 10.48619 | 0.80000 | 8.346 | 1.67553 | 18.72 |
| S7 | -12.14681 | 0.13693 | | | |
| S8* | 7.31247 | 0.70902 | -43.519 | 1.54410 | 56.91 |

(continued)

| Lens surface | Radius of curvature | Thickness or air gap | Effective focal length | Refracti ve index | Abbe number |
|---|---|---|---|---|---|
| S9* | 5.40101 | 3.47124 | | | |
| S10 | infinity | 0.00000 | | | |
| S11 | infinity | 1.50000 | infinity | 1.29100 | 113.39 |
| S12 | infinity | 0.30000 | infinity | 1.51680 | 64.2 |
| S13 | infinity | 0.00000 | | | |
| S14 | infinity | 11.00000 | | | |
| S15 | infinity | 0.21000 | infinity | 1.51680 | 64.2 |
| S16 | infinity | 0.08549 | | | |
| img | infinity | 0.01459 | | | |

[Table 18]

| Lens surface | S4 | S5 | S6 | S8 | S9 |
|---|---|---|---|---|---|
| Radius | -6.18962E+00 | 7.81150E+00 | 1.04862E+01 | 7.31247E+00 | 5.40101E+00 |
| K(Coni c) | -1.70839E+00 | -2.13541E+00 | 3.63343E+00 | -1.85463E+00 | -2.52307E+00 |
| A(4th) | 8.04135E-04 | 4.46627E-04 | -1.06508E-03 | -1.92788E-03 | -1.83252E-04 |
| B(6th) | 5.28262E-05 | 6.35658E-04 | 1.33911E-03 | -1.01005E-03 | -2.14088E-04 |
| C(8th) | -9.95368E-06 | -2.09167E-04 | -7.91986E-04 | 9.78694E-05 | -2.23322E-04 |
| D(10th) | -1.30055E-05 | 3.79270E-07 | 3.78925E-04 | -1.97466E-05 | 7.99843E-05 |
| E(12th) | 2.10811E-06 | 5.15620E-06 | -1.26374E-04 | 4.29549E-06 | -3.16630E-05 |
| F(14th) | 1.56084E-07 | -3.75037E-07 | 2.27211E-05 | 1.06781E-06 | 1.00242E-05 |
| G(16th) | -8.63234E-09 | 4.43051E-08 | -1.22677E-06 | -2.73462E-07 | -2.14944E-07 |
| H(18th) | -4.80476E-09 | -1.01893E-08 | -1.74180E-07 | -7.93823E-08 | -5.54362E-07 |
| J(20th) | 9.41869E-11 | 2.94342E-11 | 1.99362E-08 | 1.59312E-08 | 7.84552E-08 |

As described above, a lens assembly (e.g., the camera module 405 in FIG. 6 or the lens assembly 500 in FIG. 7) and/or an electronic device (e.g., the electronic devices 101, 200, 300, and 400 in FIGS. 1 to 5) including the same according to an embodiment of the disclosure may include a reflective optical member (e.g., the reflective member 455 in FIG. 6), an image sensor (e.g., the image sensor 451 or IS in FIG. 6 or FIG. 7) configured to receive or detect at least a portion of light incident through the reflective optical member, at least three lenses (e.g., the lens(es) 453 or L1, L2, L3, and L4 in FIG. 6 or FIG. 7) arranged sequentially along a direction of an optical axis (e.g., the optical axis O in FIG. 6 or FIG. 7) between the reflective optical member and the image sensor, and a tunable lens (e.g., the tunable lens TL in FIG. 7) disposed between the at least three lenses and the image sensor and configured to have a variable refractive power or curvature. The reflective optical member may reflect light incident in a direction intersecting the optical axis in the direction of the optical axis.

According to an embodiment, the reflective optical member may be configured to rotate around the optical axis.

According to an embodiment, the lens assembly may satisfy [Conditional Expression 1].

[Conditional Expression 1]

$$1.8 <= EFL/L1F1 <= 4.2$$

Herein, 'EFL' may be an effective focal length of the entire lens assembly, and 'L1F1' may be a focal length of a first lens (e.g., the first lens 453a or L1 in FIG. 6 or FIG. 7) disposed closest to the reflective optical member among the at least three lenses.

According to an embodiment, the reflective optical member may be configured to rotate around the optical axis.

According to an embodiment, the lens assembly may satisfy [Conditional Expression 2].

$$[\text{Conditional Expression 2}]$$

$$-0.2 <= L1S1/L1S2 <= 0.5$$

Herein, 'L1S1' may be a radius of curvature of an object-side surface of a first lens disposed closest to the reflective optical member among the at least three lenses, and 'L1S2' may be a radius of curvature of an image sensor-side surface of the first lens.

According to an embodiment, the lens assembly may satisfy [Conditional Expression 3].

$$[\text{Conditional Expression 3}]$$

$$1.8 <= EFL/L1F1 <= 4.2$$

Herein 'EFL' may be an effective focal length of the entire lens assembly, and 'L1F1' may be a focal length of the first lens disposed closest to the reflective optical member among the at least three lenses.

According to an embodiment, the reflective optical member may be configured to rotate around the optical axis.

According to an embodiment, the lens assembly may satisfy [Conditional Expression 4].

$$[\text{Conditional Expression 4}]$$

$$1.8 <= EFL/L1F1 <= 4.2$$

Herein, 'EFL' may be an effective focal length of the entire lens assembly, and 'L1F1' may be a focal length of the first lens disposed closest to the reflective optical member among the at least three lenses.

According to an embodiment, a first lens (e.g., the first lens 453a or L1 in FIG. 6 or FIG. 7) disposed closest to the reflective optical member among the at least three lenses may be made of a glass material.

According to an embodiment, a refractive index nd1 of the first lens may satisfy [Conditional Expression 5].

$$[\text{Conditional Expression 5}]$$

$$1.48 <= nd1 <= 1.56$$

According to an embodiment, the tunable lens may be disposed to directly face a lens (e.g., the fourth lens L4 in FIG. 7) disposed closest to the image sensor among the at least three lenses.

According to an embodiment, the lens assembly may further include an IR cut filter (e.g., the IR cut filter IF in FIG. 7) disposed between the tunable lens and the image sensor, and the IR cut filter may be disposed to directly face the tunable lens and disposed to directly face the image sensor.

According to an embodiment, an electronic device (e.g., the electronic devices 101, 200, 300, and 400 in FIGS. 1 to 5) may include a housing (e.g., the housing 210 in FIG. 2), a display (e.g., the display 201 in FIG. 2) disposed on one surface of the housing, and a lens assembly (e.g., the camera module 405 in FIG. 6 or the lens assembly 500 in FIG. 7) configured to receive or detect at least a portion of light incident on one surface of the housing or the other surface facing in a direction opposite to the one surface. The lens assembly may include a reflective optical member (e.g., the reflective member 455 in FIG. 6), an image sensor (e.g., the image sensor 451 or IS in FIG. 6 or FIG. 7) configured to receive or detect at least a portion of light incident through the reflective optical member, at least three lenses (e.g., the lens(es) 453 or L1, L2, L3, and L4 in FIG. 6 or FIG. 7) arranged sequentially along a direction of an optical axis (e.g., the optical axis O in FIG. 6 or FIG. 7) between the reflective optical member and the image sensor, and a tunable lens (e.g., the tunable lens TL in FIG. 7) disposed between the at least three lenses and the image sensor and configured to have a variable refractive power or curvature. The reflective optical member may reflect light incident in a direction intersecting the optical axis in the direction of the optical axis.

According to an embodiment, the reflective optical member may be configured to rotate around the optical axis.

According to an embodiment, the lens assembly may satisfy [Conditional Expression 6].

## [Conditional Expression 6]

$$1.8 <= EFL/L1F1 <= 4.2$$

Herein, 'EFL' may be an effective focal length of the entire lens assembly, and 'L1F1' may be a focal length of a first lens (e.g., the first lens 453a or L1 in FIG. 6 or FIG. 7) disposed closest to the reflective optical member among the at least three lenses.

According to an embodiment, the lens assembly may satisfy [Conditional Expression 7].

## [Conditional Expression 7]

$$-0.2 <= L1S1/L1S2 <= 0.5$$

Herein, 'L1S1' may be a radius of curvature of an object-side surface of a first lens disposed closest to the reflective optical member among the at least three lenses, and 'L1S2' may be a radius of curvature of an image sensor-side surface of the first lens.

According to an embodiment, a first lens (e.g., the first lens 453a or L1 in FIG. 6 or FIG. 7) disposed closest to the reflective optical member among the at least three lenses may be made of a glass material.

According to an embodiment, a refractive index nd1 of the first lens may satisfy [Conditional Expression 8].

## [Conditional Expression 8]

$$1.48 <= nd1 <= 1.56$$

According to an embodiment, the tunable lens may be disposed to directly face a lens (e.g., the fourth lens L4 in FIG. 7) disposed closest to the image sensor among the at least three lenses.

According to an embodiment, the lens assembly may further include an IR cut filter (e.g., the IR cut filter IF in FIG. 7) disposed between the tunable lens and the image sensor, and the IR cut filter may be disposed to directly face the tunable lens and disposed to directly face the image sensor.

While the disclosure has been described by way of example with respect to various embodiments, it should be understood that the various embodiments are intended to be illustrative rather than limit the disclosure. It will be apparent to those skilled in the art that various changes may be made to the form and detailed construction without departing from the scope of the disclosure, including the appended claims and their equivalents.

**Claims**

1. A lens assembly comprising:

   a reflective optical member;
   an image sensor configured to receive or detect at least a portion of light incident through the reflective optical member;
   at least three lenses arranged sequentially along a direction of an optical axis between the reflective optical member and the image sensor; and
   a tunable lens disposed between the at least three lenses and the image sensor and configured to have a variable refractive power or curvature,
   wherein the reflective optical member reflects light incident in a direction intersecting the optical axis in the direction of the optical axis.

2. The lens assembly according to claim 1, wherein the reflective optical member is configured to rotate around the optical axis.

3. The lens assembly according to claim 1, wherein the lens assembly satisfies [Conditional Expression 1],

[Conditional Expression 1]

$$1.8 <= EFL/L1F1 <= 4.2$$

wherein 'EFL' is an effective focal length of the entire lens assembly, and 'L1F1' is a focal length of a first lens disposed closest to the reflective optical member among the at least three lenses.

4.    The lens assembly according to claim 3, wherein the reflective optical member is configured to rotate around the optical axis.

5.    The lens assembly according to claim 1, wherein the lens assembly satisfies [Conditional Expression 2],

[Conditional Expression 2]

$$-0.2 <= L1S1/L1S2 <= 0.5$$

wherein 'L1S1' is a radius of curvature of an object-side surface of a first lens disposed closest to the reflective optical member among the at least three lenses, and 'L1S2' is a radius of curvature of an image sensor-side surface of the first lens.

6.    The lens assembly according to claim 5, wherein the lens assembly satisfies [Conditional Expression 3],

[Conditional Expression 3]

$$1.8 <= EFL/L1F1 <= 4.2$$

wherein 'EFL' is an effective focal length of the entire lens assembly, and 'L1F1' is a focal length of the first lens disposed closest to the reflective optical member among the at least three lenses.

7.    The lens assembly according to claim 5, wherein the reflective optical member is configured to rotate around the optical axis.

8.    The lens assembly according to claim 7, wherein the lens assembly satisfies [Conditional Expression 4],

[Conditional Expression 4]

$$1.8 <= EFL/L1F1 <= 4.2$$

wherein, 'EFL' is an effective focal length of the entire lens assembly, and 'L1F1' is a focal length of the first lens disposed closest to the reflective optical member among the at least three lenses.

9.    The lens assembly according to claim 1, wherein a first lens disposed closest to the reflective optical member among the at least three lenses is made of a glass material.

10.   The lens assembly according to claim 9, wherein a refractive index nd1 of the first lens satisfies [Conditional Expression 5],

[Conditional Expression 5]

$$1.48 <= nd1 <= 1.56$$

11.   The lens assembly according to claim 1, wherein the tunable lens is disposed to directly face a lens disposed closest to the image sensor among the at least three lenses.

12.   The lens assembly according to claim 11, further comprising an infrared cut filter disposed between the tunable lens and the image sensor,
wherein the infrared cut filter is disposed to directly face the tunable lens and disposed to directly face the image sensor.

13. An electronic device comprising:

a housing;
a display disposed on one surface of the housing; and
the lens assembly according to any one of claims 1 to 12 configured to receive or detect at least a portion of light incident on one surface of the housing or the other surface facing in a direction opposite to the one surface.

14. The electronic device according to claim 13, further comprising a processor,
wherein the processor is configured to perform a focus adjustment operation by changing the refractive power or curvature of the tunable lens.

15. The electronic device according to claim 13, further comprising a processor,
wherein the processor is configured to perform a focus adjustment operation by adjusting a thickness of the tunable lens on the optical axis.

FIG. 1

EP 4 503 631 A1

FIG. 2

FIG. 3

300

320

330

310

311

340

350

360

370

380

Z

Y

X

FIG. 4

FIG. 5

FIG. 6

FIG. 7

LONGITUDINAL
SPHERICAL ABER.

587.6000 NM
546.1000 NM
486.1000 NM

FOCUS (mm)

FIG. 8

ASTIGMATIC
FIELD CURVES

TS  IMG HT
2.90

2.18

1.45

0.73

-0.100  -0.050  0.0  0.050  0.100
FOCUS (mm)

FIG. 9

DISTORTION

IMG HT
2.90

2.18

1.45

0.73

-3.0  -1.5  0.0  1.5  3.0
DISTORTION (%)

FIG. 10

FIG. 11

LONGITUDINAL
SPHERICAL ABER.

FIG. 12

ASTIGMATIC
FIELD CURVES

DISTORTION

T S   IMG HT
2.90

IMG HT

2.18

2.90

1.45

2.18

0.73

1.45

0.73

-0.100   -0.050   0.0   0.050   0.100

-3.0   -1.5   0.0   1.5   3.0

FOCUS (mm)

DISTORTION (%)

# FIG. 13

# FIG. 14

FIG. 15

LONGITUDINAL
SPHERICAL ABER.

FIG. 16

ASTIGMATIC
FIELD CURVES

T S IMG HT

2.90

2.18

1.45

0.73

-0.100  -0.050  0.0  0.050  0.100

FOCUS (mm)

FIG. 17

DISTORTION

IMG HT

2.90

2.18

1.45

0.73

-3.0  -1.5  0.0  1.5  3.0

DISTORTION (%)

FIG. 18

FIG. 19

LONGITUDINAL
SPHERICAL ABER.

| | 587.6000 NM |
| --- | --- |
| | 546.1000 NM |
| | 486.1000 NM |

FOCUS (mm)

FIG. 20

ASTIGMATIC
FIELD CURVES

IMG HT

S | T
| 2.90

| 2.18

| 1.45

| 0.73

-0.100  -0.050   0.0    0.050   0.100
FOCUS (mm)

DISTORTION

IMG HT

2.90

2.18

1.45

0.73

-3.0   -1.5    0.0    1.5    3.0
DISTORTION (%)

FIG. 21

FIG. 22

FIG. 23

LONGITUDINAL
SPHERICAL ABER.

FIG. 24

ASTIGMATIC
FIELD CURVES

DISTORTION

FIG. 25

FIG. 26

FIG. 27

LONGITUDINAL
SPHERICAL ABER.

| | 587.6000 NM |
| | 546.1000 NM |
| | 486.1000 NM |

FOCUS (mm)

# FIG. 28

ASTIGMATIC
FIELD CURVES

S  T  IMG HT

2.90

2.18

1.45

0.73

-0.100  -0.050  0.0  0.050  0.100
FOCUS (mm)

# FIG. 29

DISTORTION

IMG HT

2.90

2.18

1.45

0.73

-3.0  -1.5  0.0  1.5  3.0
DISTORTION (%)

# FIG. 30

FIG. 31

FIG. 32

ASTIGMATIC
FIELD CURVES

IMG HT

T    S    2.90

2.18

1.45

0.73

-0.100  -0.050   0.0   0.050   0.100
FOCUS (mm)

## FIG. 33

DISTORTION

IMG HT

2.90

2.18

1.45

0.73

-3.0    -1.5    0.0    1.5    3.0
DISTORTION (%)

## FIG. 34

# FIG. 35

LONGITUDINAL
SPHERICAL ABER.

FIG. 36

ASTIGMATIC
FIELD CURVES

IMG HT

S    2.90    T

2.18

1.45

0.73

-0.100   -0.050   0.0   0.050   0.100

FOCUS (mm)

# FIG. 37

DISTORTION

IMG HT

2.90

2.18

1.45

0.73

-3.0   -1.5   0.0   1.5   3.0

DISTORTION (%)

# FIG. 38

FIG. 39

LONGITUDINAL
SPHERICAL ABER.

Legend:
- 587.6000 NM (dashed)
- 546.1000 NM (solid)
- 486.1000 NM (dash-dot)

Y-axis: 1.00, 0.75, 0.50, 0.25

X-axis: -0.100, -0.050, 0.0, 0.050, 0.100

FOCUS (mm)

FIG. 40

ASTIGMATIC
FIELD CURVES

IMG HT

FIG. 41

DISTORTION

IMG HT

FIG. 42

FIG. 43

LONGITUDINAL
SPHERICAL ABER.

FIG. 44

ASTIGMATIC
FIELD CURVES

IMG HT

S      2.90      T

2.18

1.45

0.73

-0.100  -0.050   0.0   0.050  0.100

FOCUS (mm)

FIG. 45

DISTORTION

IMG HT

2.90

2.18

1.45

0.73

-3.0   -1.5   0.0   1.5   3.0

DISTORTION (%)

FIG. 46

FIG. 47

LONGITUDINAL
SPHERICAL ABER.

FIG. 48

FIG. 49

FIG. 50

FIG. 51

LONGITUDINAL
SPHERICAL ABER.

FIG. 52

ASTIGMATIC
FIELD CURVES

IMG HT

S    2.90    T

2.18

1.45

0.73

-0.100   -0.050   0.0   0.050   0.100

FOCUS (mm)

# FIG. 53

DISTORTION

IMG HT

2.90

2.18

1.45

0.73

-3.0   -1.5   0.0   1.5   3.0

DISTORTION (%)

# FIG. 54

FIG. 55

LONGITUDINAL
SPHERICAL ABER.

FIG. 56

ASTIGMATIC
FIELD CURVES

T    S    IMG HT
2.90

2.18

1.45

0.73

-0.100  -0.050   0.0   0.050   0.100
FOCUS (mm)

DISTORTION

IMG HT
2.90

2.18

1.45

0.73

-3.0    -1.5    0.0    1.5    3.0
DISTORTION (%)

FIG. 57                FIG. 58

FIG. 59

LONGITUDINAL
SPHERICAL ABER.

FIG. 60

ASTIGMATIC
FIELD CURVES

IMG HT

S    2.90    T

2.18

1.45

0.73

-0.100   -0.050   0.0   0.050   0.100

FOCUS (mm)

FIG. 61

DISTORTION

IMG HT

2.90

2.18

1.45

0.73

-3.0   -1.5   0.0   1.5   3.0

DISTORTION (%)

FIG. 62

<div align="center">

**INTERNATIONAL SEARCH REPORT**

</div>

| International application No. |
|---|
| **PCT/KR2023/006065** |

| A. | CLASSIFICATION OF SUBJECT MATTER |
|---|---|

**H04N 23/55**(2023.01)i; **H04N 23/54**(2023.01)i; **G03B 17/12**(2006.01)i; **G03B 17/17**(2006.01)i; **G03B 3/00**(2006.01)i; **G03B 13/32**(2006.01)i; **G02B 15/14**(2006.01)i; **G02B 7/10**(2006.01)i; **G02B 7/182**(2006.01)i; **G02B 13/00**(2006.01)i

According to International Patent Classification (IPC) or to both national classification and IPC

| B. | FIELDS SEARCHED |
|---|---|

Minimum documentation searched (classification system followed by classification symbols)

H04N 23/55(2023.01); G02B 13/00(2006.01); G02B 3/14(2006.01); G03B 13/32(2006.01); G03B 17/12(2006.01); G03B 17/17(2006.01); H01L 27/146(2006.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 렌즈 어셈블리(lens assembly), 반사(reflection), 이미지 센서(image sensor), 튜너블 렌즈(tunable lens), 굴절력(refraction), 곡률(curvature), 초점 조절(focusing)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0010979 A (LG INNOTEK CO., LTD.) 27 January 2022 (2022-01-27)<br>See paragraphs [0028], [0037]-[0038], [0044]-[0045], [0047] and [0049]-[0051]; and figures 2 and 11. | 1-2,9,11-15 |
| A | | 3-8,10 |
| Y | KR 10-2010-0073284 A (LG INNOTEK CO., LTD.) 01 July 2010 (2010-07-01)<br>See paragraphs [0011]-[0014]; and figure 1a. | 1-2,9,11-15 |
| Y | KR 10-2022-0066677 A (SAMSUNG ELECTRO-MECHANICS CO., LTD.) 24 May 2022 (2022-05-24)<br>See paragraph [0043]; and figures 4-8. | 2 |
| A | KR 10-2020-0096243 A (OPTOTUNE CONSUMER AG) 11 August 2020 (2020-08-11)<br>See paragraphs [0099]-[0102]; and figures 1-2. | 1-15 |

| ✓ Further documents are listed in the continuation of Box C. | ✓ See patent family annex. |
|---|---|

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 August 2023** | **09 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/006065** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2015-0253647 A1 (APPLE INC.) 10 September 2015 (2015-09-10) See paragraphs [0063]-[0065]; and figures 1A-1B. | 1-15 |

Form PCT/ISA/210 (second sheet) (July 2022)

**INTERNATIONAL SEARCH REPORT**
Information on patent family members

International application No.

**PCT/KR2023/006065**

| Patent document cited in search report | | | Publication date (day/month/year) | Patent family member(s) | | | Publication date (day/month/year) |
|---|---|---|---|---|---|---|---|
| KR | 10-2022-0010979 | A | 27 January 2022 | None | | | |
| KR | 10-2010-0073284 | A | 01 July 2010 | KR | 10-1007093 | B1 | 10 January 2011 |
| KR | 10-2022-0066677 | A | 24 May 2022 | CN | 114518640 | A | 20 May 2022 |
| | | | | CN | 216848312 | U | 28 June 2022 |
| | | | | US | 2022-0159164 | A1 | 19 May 2022 |
| KR | 10-2020-0096243 | A | 11 August 2020 | CN | 111670389 | A | 15 September 2020 |
| | | | | EP | 3721271 | A1 | 14 October 2020 |
| | | | | EP | 4163682 | A1 | 12 April 2023 |
| | | | | JP | 2021-505936 | A | 18 February 2021 |
| | | | | US | 2020-0301116 | A1 | 24 September 2020 |
| | | | | WO | 2019-110617 | A1 | 13 June 2019 |
| US | 2015-0253647 | A1 | 10 September 2015 | CN | 104898352 | A | 09 September 2015 |
| | | | | CN | 104898352 | B | 30 March 2018 |
| | | | | EP | 3100093 | A1 | 07 December 2016 |
| | | | | EP | 3100093 | B1 | 27 January 2021 |
| | | | | KR | 10-2016-0115956 | A | 06 October 2016 |
| | | | | KR | 10-2022756 | B1 | 18 September 2019 |
| | | | | TW | 201539026 | A | 16 October 2015 |
| | | | | TW | I570431 | B | 11 February 2017 |
| | | | | US | 9557627 | B2 | 31 January 2017 |
| | | | | WO | 2015-134174 | A1 | 11 September 2015 |

Form PCT/ISA/210 (patent family annex) (July 2022)